# EUROPEAN PATENT SPECIFICATION

(11) **EP 4 492 301 B1**
(45) Date of publication and mention of the grant of the patent: **09.12.2026**
(21) Application number: 24187665.5
(22) Date of filing: 10.07.2024
(51) Int. Cl.: G06N 10/60, G06N 10/80

(54) **QUANTUM VARIABLES IMPLEMENTATION**
IMPLEMENTIERUNG VON QUANTENVARIABLEN
MISE EN UVRE DE VARIABLES QUANTIQUES

(30) Priority: 13.07.2023 IT 202300014703; 17.01.2024 US 202418414507
(43) Date of publication of application: 15.01.2025
(73) Proprietor: International Business Machines Corporation, Armonk, New York 10504 (US); Consiglio Nazionale Delle Ricerche, 00185 Roma (IT)
(72) Inventor: AGLIARDI, Gabriele, I-20090 Segrate, MI (IT); PRATI, Enrico, I-00185 Roma (IT)
(74) Representative: Pezzoli, Ennio

(56) References cited:
- EP-A1- 4 071 615
- US-A1- 2019 361 675
- US-A1- 2022 188 679
- RAPHAEL SEIDEL ET AL: "Efficient Floating Point Arithmetic for Quantum Computers", ARXIV.ORG, CORNELL UNIVERSITY LIBRARY, 201 OLIN LIBRARY CORNELL UNIVERSITY ITHACA, NY 14853, 20 December 2021 (2021-12-20), XP091118022
- MARKUS NAGEL ET AL: "A White Paper on Neural Network Quantization", ARXIV.ORG, CORNELL UNIVERSITY LIBRARY, 201 OLIN LIBRARY CORNELL UNIVERSITY ITHACA, NY 14853, 15 June 2021 (2021-06-15), XP081990169

## Description

### BACKGROUND

The present invention relates to the field of digital computer systems, and more specifically, to a method for determining quantum variables.

The relevance of quantum floating-point arithmetic is paramount across multiple application fields. However, the precision of a floating-point variable degrades significantly as an effect of repeated arithmetic manipulations, when the register size is fixed and a no-overflow requirement is guaranteed on all data points.

### SUMMARY

Various embodiments provide a method for determining quantum variables, computer program product and computer system as described by the subject matter of the independent claims. Advantageous embodiments are described in the dependent claims.

### BRIEF DESCRIPTION OF THE DRAWINGS

In the following embodiments of the invention are explained in greater detail, by way of example only, making reference to the drawings in which:
Fig. 1 is a block diagram of a computer system in accordance with an example of the present subject matter.
Fig. 2 is a flowchart of a method for determining a quantum variable in accordance with an example of the present subject matter.
Fig. 3 is a flowchart of a method for adding two quantum variables in accordance with an example of the present subject matter.
Fig. 4 is a flowchart of a method for determining weights for the addition of two random variables in accordance with an example of the present subject matter.
Fig. 5 is a flowchart of a method for determining weights for the addition of two random variables in accordance with an example of the present subject matter.
Fig. 6 is a flowchart of a method for multiplying two quantum variables in accordance with an example of the present subject matter.
Fig. 7 is a flowchart of a method for determining weights for the multiplication of two random variables in accordance with an example of the present subject matter.
Fig. 8 is a flowchart of a method for determining weights for the multiplication of two random variables in accordance with an example of the present subject matter.
Fig. 9 is a flowchart of a method for determining weights for the addition of two random variables in accordance with an example of the present subject matter.
Fig. 10 is a computing environment in accordance with an example of the present subject matter.

### DETAILED DESCRIPTION

The descriptions of the various embodiments of the present invention will be presented for purposes of illustration but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

The quantum system may refer to a system that is subject to the principles of quantum mechanics. A quantum system comprises one or more qubits. The qubits of the quantum system may be part of one or more quantum registers. Quantum calculations may be performed by manipulating the qubits within the register(s). A property of the quantum systems may be the superposition which allows quantum particles to exist in multiple states (also referred to as base states) of a given basis, simultaneously. In the following, an orthonormal basis for the quantum states of a quantum system may be referred to as the computational basis. For example, a qubit can be in a superposition of both the |0〉 base state and |1〉 base state at the same time. The base state of the quantum system may be referred to herein as |*z* > where z is an integer represented by a binary string [*z*]₂ of length *n*, to mean the state |[*z*]₂ > represents an n-qubit register, that is, the quantum system is defined by n qubits. For instance, the base state |5〉 is a compact representation of base state |101〉 on a 3-qubit register. Thus, the state of a quantum system may be represented by an integer *z* referred to herein as index or by a binary string [*z*]₂ which encode the integer *z* in the binary format e.g., the state |101〉 of the 3-qubit register may be represented by the index 5 or by the binary string 101, where the index 5 is related to the binary string as follows: 5 = 1 × 2² + 0 × 2¹ + 1 × 2⁰, where the coefficients (or binary coefficients) (*z*_{*,*0} = 1, *z*_{,1} = 0 and *z*_{,2} = 1) of the powers of two are the elements of the binary string. All possible base states of the quantum system may be represented by an ordered set of consecutive indexes. For example, the 3-qubit system has 8 possible base states which may be represented by the set of 8 indexes 0, 1, 2, 3, 4, 5, 6 and 7.

The present subject matter may enable to represent the real numbers or integer numbers using quantum computing means. The real numbers may, for example, be floating point numbers. This representation may be performed by providing the random variable in a predefined format, herein referred to as classical-quantum format. The random variable in the classical-quantum format may be a quantum variable. The quantum variable may be defined by the quantum register of a given size which is equipped with the domain, and by an encoding function representing the affine relationship. The quantum variable may potentially further be defined by some additional classical properties. The quantum variable may, for example, be a structure that can contain one random variable at a time, as much as a classical variable is a cell containing one number at a time.

The random variable of the classical-quantum format may, for example, represent floating point numbers but it is not limited to. The random variable of the classical-quantum format may thus be referred to as classically enriched quantum floating-point variable (CEFV). In the following, and for simplification of the description, the random variable of the classical-quantum format defined according to the present subject matter may be referred to as CEFV variable, but it is not limited to as types other than floating point numbers may be represented by the random variable. Providing the CEFV variable in accordance with the present subject matter may mean that the quantum register (after encoding of its qubits) represents the CEFV variable.

The definition of the CEFV variable according to the present subject matter may comprise multiple steps. In particular, the quantum register comprising the set of qubits is provided (in step S1). The set of qubits may, for example, comprise a number n of qubits. The number *n* of qubits may, for example, be a predefined number. Alternatively, the number *n* of qubits may be defined based on the CEFV variable to be defined e.g., the maximum value of the CEFV variable may be used to define the number *n* of qubits. In other words, the size of the CEFV variable may dictate the size of the provided quantum register or the size of the quantum register dictate the size of the CEFV variable. The set of qubits may define a quantum system. The total number *N* of base states in the computational basis of the quantum system may be two to the power of *n,* i.e., *N =* 2*ⁿ.* The base states of the quantum system may, for example, be the base states of the quantum system in a computational basis. For example, a single qubit may be in the base states |0> and |1> representing the number 0 and 1 respectively. For the set of *n* qubits, the computational basis may be defined as the tensor product space of the individual qubit states. The generic, global, state of the quantum system is a superposition of its base states. Particularly, the generic state of the quantum system is a linear combination of the base states, in which each base state is weighted by a coefficient corresponding to the square root of the probability of measuring the corresponding base state. The base states of the computational basis of the quantum system (in step S2) may be represented by an ordered set of consecutive nonnegative integer numbers. For example, the ordered set of consecutive nonnegative integer numbers may start from zero but it is not limited to this starting point as the skilled person may start from other values. The ordered set of consecutive nonnegative integer numbers may be referred to as the set of indexes respectively. The base states of the computational basis of the quantum system may, for example, be represented by the integer variable z. For example, for each base state S of the computational basis states of the quantum system, the integer variable *z* may have one number of the set of nonnegative integer numbers {0, ..., 2*ⁿ* - 1} that corresponds to said base state S, *z* ∈ {0, ..., 2*ⁿ* - 1}. The CEFV variable may have a probability distribution in a corresponding domain. The variable is valued (in step S3) in a finite set of domain values (of the corresponding domain) whose size is equal to the number *N* of base states of the computational basis of the quantum system. The domain may comprise a set of *N* values, where each value of the domain may be obtained by the affine relationship. The affine relationship may be an affine equation. The affine relationship is defined by the scaling factor and the offset factor. The affine relationship may, for example, be defined as *a* + *bz*, where *a* is the offset factor and *b* is the scaling factor. This may provide a classical contribution as well as quantum contribution to the CEFV variable. The scaling factor is a nonzero real number. The offset factor is a real number. The quantum contribution may be provided by the integer variable *z* that represents one of the quantum base states of the computational basis of the quantum system. The classical contribution may be provided by the offset factor and the scaling factor. The definition of the CEFV variable may further involve an encoding step (S4). In the encoding step, the set of qubits may be encoded such that the probability of measuring a state of the quantum system in the computational basis is the probability of observing the domain value associated with the index *z* representing said measured state when sampling the CEFV variable. That is, the set of qubits may be encoded such that the probability of measuring a state of the quantum system in the computational basis is the probability of obtaining the domain value associated with the index *z* representing said measured state, wherein the domain value is obtained by sampling the CEFV variable. The encoding may, for example, be an amplitude encoding or other types of encoding. The random variable is therefore represented in the computing system through the quantum system by generating a quantum variable identifying a state of the quantum system. The generation of the quantum variable is carried out by setting each coefficient of each base state to the square root of the value of the probability distribution of the variable at the domain value mapped through the affine relationship to the index associated to said base state.

For example, a CEFV variable *X* which is supported in the domain {*a + b*0, *... , a + b*(*N -* 1)} may be encoded with the global quantum state $\left|ψ\right〉 : = {\sum }_{z = 0}^{N - 1} \sqrt{{p}_{z}} \left|z\right〉$ which is a superposition of individual base states |*z* > of the computational basis, where ${p}_{z} = ℙ \left(X=a+bz\right)$, where *p_{z}* is the probability of obtaining individual base state |z > after measuring the state |*ψ* >, where $ℙ \left(X=a+bz\right)$ is the probability of obtaining *a + bz* after sampling the variable *X.* The individual base state of the quantum system is referred to as |*z* > where *z* is an index that can be represented by a binary string [*z*]₂ of length *n*, to mean that the base state |*z* > can be represented (in binary format) as |[*z*]₂ >. For example, each qubit of the set of qubits may be associated with a respective position in the binary string.

Thus, the present subject matter provides a quantum-classical hybrid representation of numbers, which may include a classical register storing global information such as data ranges, the sign and the approximation bounds. The currently defined CEFV variables may reduce the circuit depth e.g., by up to 89%, against previous techniques for circuits that calculate the sum. Indeed, the provided CEFV variables may be used to evaluate one or more functions, thus allowing quantum computers to tackle data transformations of arbitrary complexity, as long as the circuit depth and width are sustained by the hardware. The CEFV variable may be used to build functions, and then integrate these functions in full quantum workloads that solve end-to-end problems. For example, in the domain of finance, in option pricing, the CEFV variables may be used to represent payoffs resulting from elaborate calculations.

The value of the CEFV variable may provide an approximation of a respective classical domain value e.g., the CEFV variable value may be equal to exactly the classical domain value or equal to, within an error, the domain value. The present subject matter may control the level of these errors by determining the CEFV variables using tolerance ranges. For that and according to one example, the definition of the CEFV variable may further comprise: determining a tolerance range. The set of qubits may be encoded such that an approximate value of each domain value of the domain {*a + b*0, *... , a + b*(*N -* 1)} may be represented with the same quantum base state as the domain value in case the difference between the domain value and the approximate value is within the tolerance range. For example, the tolerance range may be defined as the range [-*ε⁻, ε*⁺], where *ε⁻* and *ε*⁺ may be below and above errors, *ε*⁻ ∈ [0, +∞) and *ε*⁺ ∈ [0, +∞). Providing the errors ε⁻ and *ε*⁺ may further be advantageous as it may enable to keep track of the error propagation, in particular, as the computation of the sum and the product may be done up to a rounding error.

Hence, the definition of the CEFV variable may involve a tuple of three entries namely the quantum register, the domain of values of the CEFV variable and the affine relationship. This tuple of three entries may be referred to as CEFV 3-tuple. Optionally, the tuple may contain two additional entries representing the two limits of the tolerance range respectively. This tuple of five entries may be referred to as CEFV 5-tuple. The CEFV variable may, for example, be used to perform statistical analysis (e.g., for option pricing) whose results may be used to control the operations of technical systems.

The present subject matter may enable access to more than one random variable by repeating the above definition method. This may enable to store higher amount of data. According to one example, a first CEFV variable and a second CEFV variable may be defined using the above definition. That is, steps S1 through S4 may be performed twice in order to define the first CEFV variable and a second CEFV variable.

For that, a first quantum register comprising a first set of qubits may be provided. The first set of qubits may, for example, comprise a number *n*₁ of qubits. The number *n*₁ of qubits may, for example, be a predefined number. Alternatively, the number *n*₁ of qubits may be defined based on the first CEFV variable to be defined e.g., the maximum value of the first CEFV variable may be used to define the number *n*₁ of qubits. In other word, the size of the first CEFV variable may define the size of the provided first quantum register or the size of the first quantum register defines the size of the first CEFV variable. The total number *N*₁ of base states of the computational basis of the first quantum system may thus be two to the power of *n*₁, i.e., *N*₁ = 2^{*n*¹}. The base states of the computational basis of the first quantum system may be represented by an ordered set of consecutive first indexes. For example, the ordered set of consecutive first indexes may start from zero but it is not limited to this starting point as the skilled person may start from other values. The states of the computational basis of the first quantum system may, for example, be represented by the integer variable *z*₁, where for each state base St1 of the first quantum system, the integer variable *z*₁ may have one number of the set of first indexes {0, ..., 2^{*n*¹} - 1} that corresponds to said base state St1, *z*₁ ∈ {0, ..., 2^{*n*¹} - 1}. The first CEFV variable may be valued in a finite first domain whose size is equal to the number *N*₁ of base states of the computational basis of the first quantum system. The first domain may comprise a set of *N*₁ values, where each value of the first domain may be obtained by a first affine relationship. The first affine relationship may be defined by a first scaling factor and a first offset factor. The first affine relationship may, for example, be defined as *a*₁ + *b*₁*z*₁, where *a*₁ is the first offset factor and *b*₁ is the first scaling factor. This may provide a classical contribution as well as quantum contribution to the first CEFV variable. The quantum contribution may be provided by the integer variable *z*₁ that represents one of the quantum base states of the computational basis of the first quantum system. The first set of qubits may be encoded in order to represent the first CEFV variable. The first scaling factor may, for example, be a nonzero real number. The first offset factor may, for example, be a real number.

Thus, the definition of the first CEFV variable may involve a first CEFV 3-tuple of three entries namely comprising the first quantum register, the first domain of values of the first CEFV variable and the first affine relationship.

A second quantum register comprising a second set of qubits may be provided. The second set of qubits may, for example, comprise a number *n*₂ of qubits. The number *n*₂ of qubits may, for example, be a predefined number. Alternatively, the number *n*₂ of qubits may be defined based on the second CEFV variable to be defined e.g., the maximum value of the second CEFV variable may be used to define the number *n*₂ of qubits. In other word, the size of the second CEFV variable may define the size of the provided second quantum register or the size of the second quantum register may define the size of the second CEFV variable. The total number *N*₂ of base states of the computational basis of the second quantum system may thus be two to the power of *n*₂, i.e., *N*₂ = 2^{*n*²}*.* The base states of the computational basis of the second quantum system may be represented by an ordered set of consecutive second indexes. For example, the ordered set of consecutive second indexes may start from zero but it is not limited to this starting point as the skilled person may start from other values. The base states of the computational basis of the second quantum system may, for example, be represented by the integer variable *z*₂, where for each base state St2, the integer variable *z*₂ may have one number of the set of second indexes {0, ..., 2^{*n*²} - 1} that corresponds to said base state St2, *z*₂ ∈ {0, ..., 2^{*n*²} - 1}. The second CEFV variable may be valued in a finite second domain whose size is equal to the number *N*₂ of base states of the computational basis of the second quantum system. The second domain may comprise a set of *N*₂ values, where each value of the second domain may be obtained by a second affine relationship. The second affine relationship may be defined by a second scaling factor and a second offset factor. The second affine relationship may, for example, be defined as *a*₂ + *b*₂*z*₂, where *a*₂ is the second offset factor and *b*₂ is the second scaling factor. This may provide a classical contribution as well as quantum contribution to the second CEFV variable. The quantum contribution may be provided by the integer variable *z*₂ that represents one of the quantum base states of the computational basis of the first quantum system. The second set of qubits may be encoded in order to represent the second CEFV variable. The second scaling factor may, for example, be a nonzero real number. The second offset factor may, for example, be a real number.

Thus, the definition of the second CEFV variable may involve a second CEFV 3-tuple of three entries namely comprising the second quantum register, the second domain of values of the second CEFV variable and the second affine relationship.

In one encoding example, the first set of qubits and the second set of qubits may be encoded such that the state of the overall system formed by the two sets of qubits may not be separable as two states, as an effect of the quantum property of entanglement. In this case, the probability of measuring a state of a joint quantum system of the first and second quantum systems in the computational basis is the probability of jointly observing the first domain value associated with the first index representing said measured state when sampling the first random variable and the second domain value associated with the second index representing said measured state when sampling the second random variable. In formulas, the overall state |*ψ* > may be decomposed as $\left|ψ\right〉 : = {\sum }_{{z}_{1} = 0}^{{N}_{1} - 1} \sqrt{{p}_{{z}_{1} , {z}_{2}}} \left|{z}_{1}\right〉 \left|{z}_{2}\right〉$ where ${p}_{{z}_{1} , {z}_{2}} = ℙ \left({X}_{1}={a}_{1}+{b}_{1}{z}_{1},{X}_{2}={a}_{2}+{b}_{2}{z}_{2}\right)$. This may enable to provide the first CEFV variable and second CEFV variable as dependent variables.

In one encoding example, the first set of qubits may be encoded such that the state of the overall system formed by the two sets of qubits is separable as the tensor product of two states, each representing one set of qubits. In formulas, the overall state |*ψ* > may be decomposed as |*ψ* > = |*ψ*₁ > |*ψ*₂ > . In this case, the probability of measuring a state of the first quantum system in the computational basis is the probability of observing the first domain value associated with the first index representing said measured state when sampling the first random variable. The second set of qubits may be encoded such that the probability of measuring a state of the second quantum system in the computational basis is the probability of observing the second domain value associated with the second index representing said measured state when sampling the second random variable. In formulas, $\left|{ψ}_{1}\right〉 : = {\sum }_{{z}_{1} = 0}^{{N}_{1} - 1} \sqrt{{p}_{{z}_{1}}} \left|{z}_{1}\right〉$ where ${p}_{{z}_{1}} = ℙ \left({X}_{1}={a}_{1}+{b}_{1}{z}_{1}\right)$ and $\left|{ψ}_{2}\right〉 : = {\sum }_{{z}_{2} = 0}^{{N}_{2} - 1} \sqrt{{p}_{{z}_{2}}} \left|{z}_{2}\right〉$ , where ${p}_{{z}_{2}} = ℙ \left({X}_{2}={a}_{2}+{b}_{2}{z}_{2}\right)$.This may enable to provide the first CEFV variable and second CEFV variable as independent variables.

### Addition of CEFV variables

The present subject matter may further be advantageous as it may equipe the CEFV variables with basic operations such as addition and multiplication operations that may be performed without overflow. The present subject matter may make use of the hybrid format of the CEFV variables to perform the sum efficiently. For example, to sum two CEFVs variables, the offset factors may be summed together with a classical computer, while quantum states may be processed by a quantum circuit that keeps into account the two scaling factors.

According to one first addition example, adding the first CEFV variable and the second CEFV variable comprises: providing an output quantum register comprising a third set of qubits, thereby defining a third quantum system. The first quantum system, second quantum system and third quantum system may form a joint or composite quantum system. A first set of weights may be determined for the first set of qubits respectively. A second set of weights may be determined for the second set of qubits respectively. The first set of weights and the second set of weights are determined such that the output quantum register after applying the sum algorithm represents a third random variable of the classical-quantum format, so that the third random variable is a (possibly approximate) representation of the sum of the first and second random variables. The third CEFV variable may be defined by a CEFV 3-tuple or by a CEFV 5-tuple. A polynomial may be defined. The polynomial may be the sum of monomials, wherein each monomial is associated with respective qubit of the first set of qubits and second set of qubits, wherein each monomial is defined as the product of an unknown and a weight associated with the respective qubit. A unitary quantum transformation that is configured to act on the first quantum register and the second quantum register, on the output quantum register, and on an auxiliary register may be generated in order to evaluate the polynomial into the output quantum register. The unitary transformation may be applied on the first and second quantum registers. This may result in encoding the third set of qubits such that the base states of the computational basis of the third quantum system represent values of the third random variable of the classical-quantum format. The auxiliary register may, for example, comprise a set of qubits used for internal calculations for the evaluation of the unitary transformation, e.g., the auxiliary register may be used as a temporary memory, by the unitary transformation and then restored to the original |0> base state (namely, freed for other usages). The unknown may, for example, be a variable.

This example may be advantageous as it may enable to perform the sum using classical and quantum computing. In addition, the resulting sum also represents a random variable according to the classical-quantum format of the present subject matter.

The first addition example may, for example, be described using the following notations. The output quantum register may comprise a number *nₒᵤₜ* of qubits. The number *nₒᵤₜ* of qubits may, for example, be a predefined number. Alternatively, the number *nₒᵤₜ* of qubits may be iteratively defined as described below. The total number *Nₒᵤₜ* of base states of the computational basis of the third quantum system may thus be two to the power of *nₒᵤₜ,* i.e., *Nₒᵤₜ* = 2*^{n^{out}}*. Any pair of a base state of the computational basis of the first set of qubits and a base state of the computational basis of the second set of qubits may be represented respectively by the pair (*z*₁, *z*₂) of first index *z*₁ and second index *z*₂, where *z*₁ ∈ {0, ... , 2^{*n*¹} - 1} and *z*₂ ∈ {0, ... , 2^{*n*²} - 1}. The first index *z*₁ may be represented in a binary format as follows: ${z}_{1} = {\sum }_{{j}_{1} = 0}^{{n}_{1} - 1} {z}_{1 , {j}_{1}} {2}^{{j}_{1}}$, where *z*_{1,*j*₁} ∈ {0,1} may represent one respective qubit of the first set of qubits. For example, each qubit of the first set of qubits may be associated with a respective position in the binary string [*z*₁]₂. The second index *z*₂ may be represented in a binary format as follows: ${z}_{2} = {\sum }_{{j}_{2} = 0}^{{n}_{2} - 1} {z}_{2 , {j}_{2}} {2}^{{j}_{2}}$, where *z*_{2,*j*₂} ∈ {0,1} may represent one respective qubit of the second set of qubits. For example, each qubit of the second set of qubits may be associated with a respective position in the binary string [*z*₂]₂. The first set of weights may be referred to as ${\left[{w}_{1 , {j}_{1}}\right]}_{{j}_{1} = 0}^{{n}_{1} - 1}$, where each weight is associated with a respective qubit of the first set of qubits. The second set of weights may be referred to as ${\left[{w}_{2 , {j}_{2}}\right]}_{{j}_{2} = 0}^{{n}_{2} - 1}$, where each weight is associated with a respective qubit of the second set of qubits. The polynomial *p*(z₁,*z*₂) may, for example, be obtained by the following sum in binary format: $p \left({z}_{1}, {z}_{2}\right) = {\sum }_{{j}_{1} = 0}^{{n}_{1} - 1} {z}_{1 , {j}_{1}} {w}_{1 , {j}_{1}} + {\sum }_{{j}_{2} = 0}^{{n}_{2} - 1} {z}_{2 , {j}_{2}} {w}_{2 , {j}_{2}}$. This may provide an equation that represents every pair of qubits of the first set of qubits and the second set of qubits. Each individual product of the products *z*_{1,*j*₁}*w*_{1,*j*₁} in the polynomial defines a monomial of the polynomial, and each individual product of the products *z*_{2,*j*₂} *w*_{2,*j*₂} is a monomial of the polynomial, where each of the unknowns *z*_{1,*j*₁} represents a binary coefficient and is associated with a respective qubit of the first set of qubits and each of the unknowns *z*_{2,*j*₂} represents a binary coefficient and is associated with a respective qubit of the second set of qubits. The unitary transformation may be generated for the defined polynomial *p*(*z*₁*,* z₂). The unitary transformation may be implemented using a quantum circuit. The unitary transformation may, for example, be generated using the method described in the paper: R. Seidel, N. Tcholtchev, S. Bock, C. K.-U. Becker, and M. Hauswirth, "Efficient Floating Point Arithmetic for Quantum Computers," IEEE Access, vol. 10, pp. 72400-72415, 2022.

According to one example implementation of the first addition example, the states of the third quantum system represent values of the third random variable of the classical-quantum format through a third affine relationship defined by a third scaling factor and a third offset factor, wherein the third offset factor is the classical sum of the first offset factor and second offset factor and the third scaling factor is the product of an alignment scale and a predefined target scale, wherein the alignment scale is the inverse of a power of two such that the sum can be performed without overflow. The target scale may, for example, be a user-defined scale e.g., the target scale may be received as input from the user. The alignment scale may, for example, be automatically determined. For example, the third offset factor may be referred to as *aₒᵤₜ.* The third scaling factor may be referred to as *bₒᵤₜ.* This example may enable to obtain the third offset factor as the sum of the first offset factor and the second offset factor, that is *aₒᵤₜ* = *a*₁ + *a₂* and the third scaling factor may be provided as the product of the target scale *b_{lead}* and the alignment scale *b_{scale},* that is *bₒᵤₜ = b_{scale}b_{lead}.* The base states of the computational basis of the third quantum system may, for example, be represented by the integer variable *zₒᵤₜ,* where for each base state St3 of the third quantum system, the integer variable *zₒᵤₜ* may have one number of the set of indexes {0, ..., 2*^{n^{out}}* - 1} that corresponds to the base state St3, *zₒᵤₜ* ∈ {0, ..., 2*^{n^{out}}* - 1}.

This example may be advantageous because, without executing the CEFV variable definition method, the sum algorithm enables to obtain this classical-quantum format variable. This example implementation may be automatically executed, and thus the third scaling factor and the third offset factor for the output of the sum may automatically be determined. As a consequence, the no-overflow can be guaranteed automatically.

In one example implementation of the first addition example, the first set of weights and the second set of weights may be determined such that the output quantum register, after performing the sum of the first CEFV variable and the second CEFV variable, represents a third CEFV variable which encodes an approximation of the sum of the two input variables without overflow. For that, the first set of weights and the second set of weights may be chosen such that the sum of the absolute value of the weights in the first set of weights and in the second set of weights is smaller than or equal to the maximal index 2*^{n^{out}}* - 1 of the output quantum register. Each weight of the first set of weights and second set of weights may be an integer number. A rounding may be applied to the weight to make sure that the resulting weight is an integer number. The maximal index 2*^{n^{out}}* - 1 is provided with the minus one term because the indexes are nonnegative integers, meaning that the indexing of the output quantum register starts from zero and ends with the maximal index of 2*^{n^{out}}* - 1.

In one example implementation of the first addition example, the first set of weights and the second set of weights may be determined such that the output quantum register, after performing the sum of the first CEFV variable and the second CEFV variable would represent a third CEFV variable which encodes an approximation of the sum of the two input variables without overflow. For that, the first set of weights *w*_{1,*j*₁} may be up to some factor and rounding equal to 2^{*j*¹}/*bₒᵤₜ* and the second set of weights *w*_{2,*j*₂} may be up to some factor and rounding equal to 2^{*j*²}/*bₒᵤₜ.* That is, each weight of the first set of weights and second set of weights before rounding may be proportional to the inverse of the third scaling factor, *w*_{1,*j*₁} ∝ 1/*bₒᵤₜ* and *w*_{2,*j*₂} ∝ 1/*bₒᵤₜ.* In addition, each weight of the first set of weights before rounding may include (2^{*j*¹}) two to the power of the position (*j*₁) of the associated qubit of the weight. Each weight of the second set of weights before rounding may include (2^{*j*²}) two to the power of the position (*j*₂) of the associated qubit of the weight. In this example, the third scaling factor *bₒᵤₜ* may be changed one or more times until the sum of the absolute value of the weights becomes smaller than or equal to the maximal index 2*^{n^{out}}* - 1 of the output quantum register.

The value of the third CEFV variable may be equal to, within an error, the corresponding classical sum of the first and second domain values of the first and second CEFV variables. In addition to controlling the overflow, the present subject matter may control the level of these errors. For that, in one example implementation of the first addition example, the first set of weights and the second set of weights may be determined such that the output quantum register, after performing the sum of the first CEFV variable and the second CEFV variable, represents a third CEFV variable which is defined by a CEFV 5-tuple. That is, the third CEFV variable is associated with a tolerance range so that the same state of the output quantum register is associated with variables that are within the range. This may enable to approximate the sum within (controlled) tolerances specified for the output.

In one example implementation of the first addition example, the first set of weights and the second set of weights may be determined such that the output quantum register, after performing the sum of the first CEFV variable and the second CEFV variable, represents a third CEFV variable, wherein the first set of weights may be provided as follows: *w*_{1,*j*₁}is the closest-integer rounding of 2^{*j*¹}*b*₁/*bₒᵤₜ* and the second set of weights may be provided as follows: *w*_{2,*j*₂} is the closest-integer rounding of 2^{*j*²}*b*₂/*bₒᵤₜ.*

According to one example implementation of the first addition example, the alignment scale is equal to the inverse of two to the power of an integer *M* (*b_{scale} =* 2^{-*M*}), where *M* may, for example, be the highest integer so that the sum (i.e., ${\sum }_{{j}_{1} = 0}^{{n}_{1} - 1} \left|{w}_{1 , {j}_{1}}\right| + {\sum }_{{j}_{2} = 0}^{{n}_{2} - 1} \left|{w}_{2 , {j}_{2}}\right|$ ) of the absolute value of the weights in the first set of weights and in the second set of weights is smaller than or equal to the maximal index 2*^{n^{out}}* - 1 of the output quantum register. This may, for example, enable to obtain the third scaling factor as follows: *bₒᵤₜ =* 2-*^{M}b_{lead,}* where *b_{scale} =* 2⁻*^{M}.* The integer number *M* is the highest integer number whose associated weights *w*_{1,*j*₁} and *w*_{2,*j*₂} fulfil the condition: ${\sum }_{{j}_{1} = 0}^{{n}_{1} - 1} \left|{w}_{1 , {j}_{1}}\right| + {\sum }_{{j}_{2} = 0}^{{n}_{2} - 1} \left|{w}_{2 , {j}_{2}}\right| \leq {2}^{{n}_{out}} - 1$.

In one example implementation of the first addition example, the integer number *M* may be initialized as follows: $M ← \left⌈{log}_{2}\left({2}^{{n}_{out}}-1\right)-{log}_{2}\left(\left({2}^{{n}_{1}}-1\right)\left|\frac{{b}_{1}}{{b}_{lead}}\right|+\left({2}^{{n}_{2}}-1\right)\left|\frac{{b}_{2}}{{b}_{lead}}\right|\right)\right⌉$ and then changed one or more times to obtain the highest integer number such that the associated weights fulfil the condition: ${\sum }_{{j}_{1} = 0}^{{n}_{1} - 1} \left|{w}_{1 , {j}_{1}}\right| + {\sum }_{{j}_{2} = 0}^{{n}_{2} - 1} \left|{w}_{2 , {j}_{2}}\right| \leq {2}^{{n}_{out}} - 1$. Alternatively, the integer number *M* may be initialized with any other integer such as an integer that is obtained from a previous execution of the first addition example and then changed one or more times to obtain the highest integer such that the associated weights fulfil the condition: ${\sum }_{{j}_{1} = 0}^{{n}_{1} - 1} \left|{w}_{1 , {j}_{1}}\right| + {\sum }_{{j}_{2} = 0}^{{n}_{2} - 1} \left|{w}_{2 , {j}_{2}}\right| \leq {2}^{{n}_{out}} - 1$.

According to one example implementation of the first addition example, the first set of weights and the second set of weights may be defined using an iterative method. In step aa1) a current value of the first and second sets of weights may be provided. The first and second sets of weights may be randomly set, making sure that each of the first and second sets of weights is an integer. In step bb1) the sum of the absolute value of the weights in the first and second sets of weights may be performed. In step cc1) it may be determined whether the sum is smaller than or equal to the maximal index 2*^{n^{out}}* - 1 of the output quantum register. In step dd1) in case the sum is higher than the maximal index 2*^{n^{out}}* - 1, steps aa1) to bb1) may be repeated (e.g., trying other values for the first and second sets of weights). In step ee1) the last determined first and second sets of weights may be provided.

In one example, after providing the first set and second set of weights in step ee1), the number of qubits of the output quantum register may be lowered to the power of the closest number of the sum, wherein the closest number is a power of two. For example, the last provided weights may fulfill the inequality: ${\sum }_{{j}_{1} = 0}^{{n}_{1} - 1} \left|{w}_{1 , {j}_{1}}\right| + {\sum }_{{j}_{2} = 0}^{{n}_{2} - 1} \left|{w}_{2 , {j}_{2}}\right| \leq {2}^{{n}_{out}} - 1$ . This means that there may be a gap of values between the sum ${\sum }_{{j}_{1} = 0}^{{n}_{1} - 1} \left|{w}_{1 , {j}_{1}}\right| + {\sum }_{{j}_{2} = 0}^{{n}_{2} - 1} \left|{w}_{2 , {j}_{2}}\right|$ and the maximal index 2*^{n^{out}}* - 1. The smallest value in this gap which is a power of two (2*^{s}*) may be selected and the number of qubits *nₒᵤₜ* may be replaced by the power s of the selected number. Alternatively, in case (in step cc1) it is determined that the sum is smaller than or equal to the maximal index 2*^{n^{out}}* - 1 of the output quantum register, the number of qubits of the output quantum register may be repeatedly lowered (e.g., by one), wherein for each lowering: steps aa1) to cc1) may be performed, wherein the repetition is performed as long as the sum is smaller than or equal to the maximal index 2*^{n^{out}}* - 1 of the output quantum register associated with the lowered number.

An example implementation of the sum may be described as follows. For example, the first quantum register comprises one qubit and the second quantum register comprises one qubit, e.g., *n*₁ = 1 and *n*₂ = 1. The first offset factor and the second offset factor are equal to zero, *a*₁ = 0 and *a*₂ = 0. The first scaling factor is the target scale, *b*₁ *= b_{lead}* and the second scaling factor is equal to 1/3, b₂ = 1/3. The output quantum register may comprise four qubits, *nₒᵤₜ* = 4. The first quantum register contains base state |*z*1〉 = 11), as a representation of the floating point number 1, and the second quantum register contains base state |z2〉 = |1〉, as a representation of 1/3. The sum may be expected to be an approximation of 4/3. The number of qubits in the output quantum register is *nₒᵤₜ* = 4, as one may need as many digits as possible to accurately represent a repeating binary fraction, constrained by *nₒᵤₜ* ≤ *nₘₐₓ.* The iterative method may start with M = 4, in which case *w*₁ = [2⁴] = [16], ${w}_{2} = \left[rnd\left(\frac{{2}^{4}}{3}\right)\right] = \left[rnd\left(\frac{16}{3}\right)\right] = \left[5\right]$, where *rnd* denotes the rounding. Square brackets are kept to emphasize that in the more general case of many input qubits, *w*₁ and *w*₂ would be vectors. Such weights do not respect the exit inequality condition si-e 16 + 5 > 2⁴ - 1. Therefore, M is decreased to 3, and *w*₁ = [2³] = [8], ${w}_{2} = \left[rnd\left(\frac{{2}^{3}}{3}\right)\right] = \left[rnd\left(\frac{8}{3}\right)\right] = \left[3\right] = \left[1+2\right]$. *w*₂ = [1 + 2] means that the (only) digit in the second quantum register affects both the last and second-to-last result qubit in the output quantum register, namely the third and fourth result digit respectively. The calculation outcome then writes ${2}^{- M} {b}_{lead} \left({w}_{1 , 0}{z}_{1 , 0}+{w}_{2 , 0}{z}_{2 , 0}\right) = 1 + \frac{1 + 2}{8}$, so that 1/3 has been converted into $\frac{1 + 2}{8}$, that is its best representing fraction given the number of available qubits.

### Multiplication of CEFV variables

For simplification of the description, the same names and variables which are used to describe the sum of two variables are used to describe the multiplication of two variables. For example, the size of the output quantum register is *nₒᵤₜ,* the third scaling factor is *bₒᵤₜ* and the third offset factor is *aₒᵤₜ* are similarly noted but they are clearly different taking into account their application context namely the sum or multiplication.

According to one first multiplication example, the multiplication of the first random variable and second random variable comprises: providing an output quantum register comprising a third set of qubits, thereby defining a third quantum system, the first, second and third quantum systems forming a joint quantum system. A determination of a first set of weights for the first set of qubits respectively, a second set of weights for the second set of qubits respectively and a third set of qubits for the pairs of qubits of the first set and second set of qubits respectively may be performed. The determining of the three sets of weights may be performed such that the output quantum register after performing the multiplication represents a third random variable of the classical-quantum format. A polynomial may be defined. The polynomial may be defined as a sum of first degree monomials and second degree monomials. Each first degree monomial is associated with respective qubit of the first set of qubits and the second set of qubits. Each first degree monomial is defined as the product of an unknown and a weight associated with the respective qubit. Each second degree monomial is associated with a respective pair of qubits of the first and second sets of qubits, wherein each second degree monomial is defined as the product of a weight associated with the pair of qubits, and two unknowns, respectively associated with a qubit of the first set and a qubit of the second set of qubits. A unitary quantum transformation that is configured to act on the first quantum register and second quantum register, on the output quantum register, and on an auxiliary register may be generated in order to evaluate the polynomial into the output quantum register. The unitary transformation may be applied on the first and second quantum registers, thereby encoding the third set of qubits such that the base state of the computational basis of the third quantum system represents values of a third random variable of the classical-quantum format.

This example may be advantageous as it may enable to perform the multiplication using classical and quantum computing. In addition, the resulting product also represents a random variable according to the classical-quantum format of the present subject matter.

The first multiplication example may, for example, be described using the following notations. The output quantum register may comprise a number *nₒᵤₜ* of qubits. The number *nₒᵤₜ* of qubits may, for example, be a predefined number. Alternatively, the number *nₒᵤₜ* of qubits may be iteratively defined as described below. The total number *Nₒᵤₜ* of base states of the computational basis of the third quantum system may thus be two to the power of *nₒᵤₜ,* i.e., *Nₒᵤₜ* = 2*^{n^{out}}*. Any pair of a base state of the first set of qubits and a base state of the second set of qubits may be represented respectively by the pair (*z*₁, *z*₂) of first index *z*₁ and second index z₂, where *z*₁ ∈ {0, ... , 2^{*n*¹} - 1} and *z*₂ ∈ {0, ..., 2^{*n*²} - 1}. The first index z₁ may be represented in a binary format as follows: ${z}_{1} = {\sum }_{{j}_{1} = 0}^{{n}_{1} - 1} {z}_{1 , {j}_{1}} {2}^{{j}_{1}}$ *,* where *z*_{1,*j*₁} ∈ {0,1} may represent one respective qubit of the first set of qubits. For example, each qubit of the first set of qubits may be associated with a respective position in the binary string [*z*₁]₂. The second index *z*₂ may be represented in a binary format as follows: ${z}_{2} = {\sum }_{{j}_{2} = 0}^{{n}_{2} - 1} {z}_{2 , {j}_{2}} {2}^{{j}_{2}}$, where *z*_{2,*j*₂} ∈ {0,1} may represent one respective qubit of the second set of qubits. For example, each qubit of the second set of qubits may be associated with a respective position in the binary string [*z*₂]₂. The first set of weights may be referred to as ${\left[{w}_{1 , {j}_{1}}\right]}_{{j}_{1} = 0}^{{n}_{1} - 1}$, where each weight is associated with a respective qubit of the first set of qubits. The second set of weights may be referred to as ${\left[{w}_{2 , {j}_{2}}\right]}_{{j}_{2} = 0}^{{n}_{2} - 1}$, where each weight is associated with a respective qubit of the second set of qubits. The third set of weights may be referred to as ${\left[{w}_{prod , {j}_{1} + {j}_{2}}\right]}_{{j}_{1} = 0 , {j}_{2} = 0}^{{n}_{1} - 1 , {n}_{2} - 1}$, where each weight is associated with a respective pair of qubits (*j*₁, *j*₂) of the first set of qubits and the second set of qubits. The polynomial *p*(*z*₁*, z*₂) may, for example, be obtained by the following sum in binary format: $p \left({z}_{1}, {z}_{2}\right) = {\sum }_{{j}_{1} = 0}^{{n}_{1} - 1} {z}_{1 , {j}_{1}} {w}_{1 , {j}_{1}} + {\sum }_{{j}_{2} = 0}^{{n}_{2} - 1} {z}_{2 , {j}_{2}} {w}_{2 , {j}_{2}} + {\sum }_{{j}_{1} = 0}^{{n}_{1} - 1} {\sum }_{{j}_{2} = 0}^{{n}_{2} - 1} {z}_{1 , {j}_{1}} {z}_{2 , {j}_{2}} {w}_{prod , {j}_{1} + {j}_{2}}$ . This may provide an equation that represents every pair of qubits of the first set of qubits and the second set of qubits. Each product of the products *z*_{1,*j*₁}*w*_{1*,j*₁} in the polynomial defines a first degree monomial of the polynomial, and each product of the products *z*_{2,*j*₂}*w*_{2,*j*₂} is a first degree monomial of the polynomial, where each of the unknowns *z*_{1,*j*₁} represents a binary coefficient and is associated with a respective qubit of the first set of qubits and each of the unknowns *z*_{2,*j*₂} represents a binary coefficient and is associated with a respective qubit of the second set of qubits. Each product of the products *z*_{1,*j*₁}*z*_{2,*j*₂}*w*_{*prod,j*₁*+j*₂} is a second degree monomial of the polynomial, where each of the z_{1,*j*₁}*z*_{2,*j*₂} is the product of two unknowns, respectively associated with a qubit of the first set of qubits and a qubit of the second set of qubits. The unitary transformation may be generated for the defined polynomial *p*(*z*₁*, z*₂). The unitary transformation may be implemented using a quantum circuit. The unitary transformation may, for example, be generated using the method described in the paper: R. Seidel, N. Tcholtchev, S. Bock, C. K.-U. Becker, and M. Hauswirth, "Efficient Floating Point Arithmetic for Quantum Computers," IEEE Access, vol. 10, pp. 72400-72415, 2022.

This example may enable to obtain the third offset factor as the product of the first offset factor and the second offset factor, that is *aₒᵤₜ* = *a*₁*a*₂ and the third scaling factor may be the target scale. The base states of the computational basis of the third quantum system may, for example, be represented by the integer variable *zₒᵤₜ,* where for each base state St4, the integer variable *zₒᵤₜ* may have one number of the set of indexes {0, ..., 2*^{n^{out}}* - 1} that corresponds to the each base state St4, *zₒᵤₜ* ∈ {0, ..., 2*^{n^{out}}* - 1}.

According to one example implementation of the first multiplication example, the base states of the computational basis of the third quantum system may represent values of the third random variable of the classical-quantum format through a third affine relationship defined by a third scaling factor and a third offset factor, wherein the third offset factor is the classical product of the first and second offsets and the third scaling factor is a predefined target scale. This example implementation may be automatically executed, and thus the third scaling factor and the third offset factor for the output of the product may automatically be determined. As a consequence, the no-overflow can be guaranteed automatically.

According to one example, each weight comprises an alignment scale, wherein the alignment scale is equal to the inverse of two to the power of an integer M, where M is the highest integer so that the sum (i.e., ${\sum }_{{j}_{1} = 0}^{{n}_{1} - 1} \left|{w}_{1 , {j}_{1}}\right| + {\sum }_{{j}_{2} = 0}^{{n}_{2} - 1} \left|{w}_{2 , {j}_{2}}\right| + {\sum }_{{j}_{1} = 0}^{{n}_{1} - 1} {\sum }_{{j}_{2} = 0}^{{n}_{2} - 1} \left|{w}_{prod , {j}_{1} + {j}_{2}}\right|$ ) of the absolute value of the weights in the first set of weights and in the second set of weights and in the third set of weights is smaller than or equal to the maximal index *2^{n^{out}}* - 1 of the output quantum register, wherein the alignment scale is provided such that the product can be performed without overflow.

This example may be advantageous because without executing the CEFV variable definition method, the way the product is performed enables to "preserve" this classical-quantum format variable.

According to one example implementation of the first multiplication example, the integer number M may, for example, be defined as follows: $M ← \left⌈{log}_{2}\left({2}^{{n}_{out}}-1\right)-{log}_{2}\left({\sum }_{k = 1 , 2 , prod} \left({2}^{{n}_{k}}-1\right) \left|\frac{{c}_{k}}{{b}_{lead}}\right|\right)\right⌉$ where *c*₁ = *b*₁*a*₂*, c*₂ *= b*₂*a*₁*, c_{prod} = b*₁*b*₂ and *b_{lead}* is the target scale.

According to one example implementation of the first multiplication example, the first set of weights and the second set of weights and the third set of weights may be defined using an iterative method. In step aa2) a current value of the first, second and third sets of weights may be provided. The first, second and third sets of weights may be randomly set to, making sure that each of the first, second and third sets of weights is an integer. In step bb2) the sum of the first, second and third sets of weights may be performed. In step cc2) it may be determined whether the sum is smaller than or equal to the maximal index 2*^{n^{out}}* - 1 of the output quantum register. In step dd2) in case the sum is higher than the maximal index, steps aa2) to bb2) may be repeated (e.g., trying other values for the first, second and third sets of weights). In step ee2) the last determined first, second and third sets of weights may be provided.

In one example, after providing the first set, second set and third set of weights in step ee2), the number of qubits of the output quantum register may be lowered to a power of a closest number of the sum that is a power of two. For example, the last provided weights may fulfill the inequality: ${\sum }_{{j}_{1} = 0}^{{n}_{1} - 1} \left|{w}_{1 , {j}_{1}}\right| + {\sum }_{{j}_{2} = 0}^{{n}_{2} - 1} \left|{w}_{2 , {j}_{2}}\right| + {\sum }_{{j}_{1} = 0}^{{n}_{1} - 1} {\sum }_{{j}_{2} = 0}^{{n}_{2} - 1} \left|{w}_{prod , {j}_{1} + {j}_{2}}\right| \leq {2}^{{n}_{out}} - 1$ . This means that there may be a gap of values between the sum ${\sum }_{{j}_{1} = 0}^{{n}_{1} - 1} \left|{w}_{1 , {j}_{1}}\right| + {\sum }_{{j}_{2} = 0}^{{n}_{2} - 1} \left|{w}_{2 , {j}_{2}}\right| + {\sum }_{{j}_{1} = 0}^{{n}_{1} - 1} {\sum }_{{j}_{2} = 0}^{{n}_{2} - 1} \left|{w}_{prod , {j}_{1} + {j}_{2}}\right|$ and the maximal index 2*^{n^{out}}* - 1. The smallest value of this gap which is a power of two (2*^{s}*) may be selected and the number of qubits *nₒᵤₜ* may be replaced by the power s of the selected number. Alternatively, in case (in step cc2) is determined that the sum is smaller than or equal to the maximal index 2*^{n^{out}}* - 1, the number of qubits of the output quantum register may be repeatedly lowered (e.g., by one), wherein for each lowering: performing steps aa2) to cc2), wherein the repetition is performed as long as the sum is smaller than or equal to the maximal index 2*^{n^{out}}* - 1 of the output quantum register associated with the lowered number.

According to one example implementation of the first multiplication example, the first set of weights and the second set of weights and the third set of weights may be defined as follows: a first rescaling factor *c*₁ may be defined for the first set of weights. A second rescaling factor c*₂* may be defined for the second set of weights and a third rescaling factor *c_{prod}* may be defined for the third set of weights. The rescaling factors may be defined as function of the offset and scaling factors as follows: *c*₁ *= b*₁*a*₂*, c*₁ *= b*₂*a*₁ and *c_{prod} = b*₁*b*₂*.* In this case, the first set of weights may be defined as *w_{1,j₁}* = *2*^{*j*¹}*2^{M}c*₁*lb_{lead},* the second set of weights may be defined as *w*_{2,*j*₂} *=* 2^{*j*²}2*^{M}c*₂/*b_{lead}* and the third set of weights may be defined as *w*_{*prod,j*₁+*j*₂} = 2^{*j*¹+*j*²}2*^{M}c_{prod}*/*b_{lead},* where *b_{lead}* is the target scale.

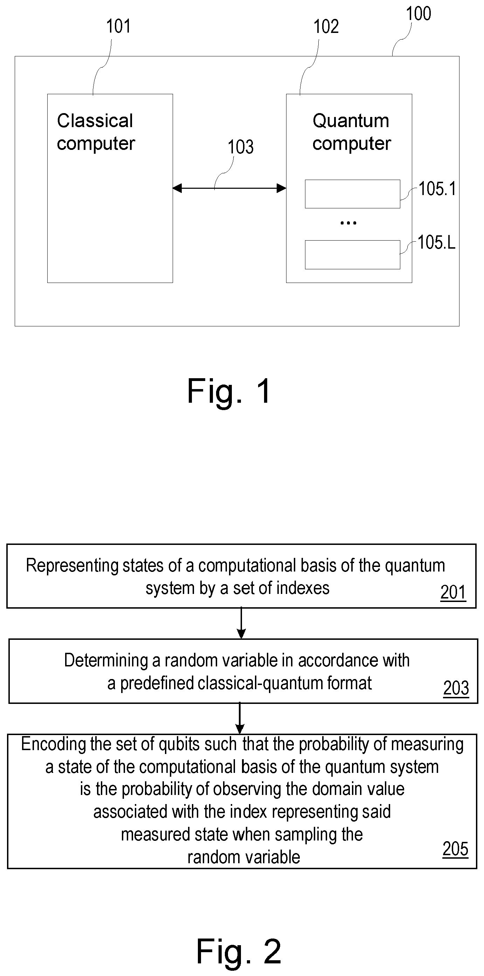

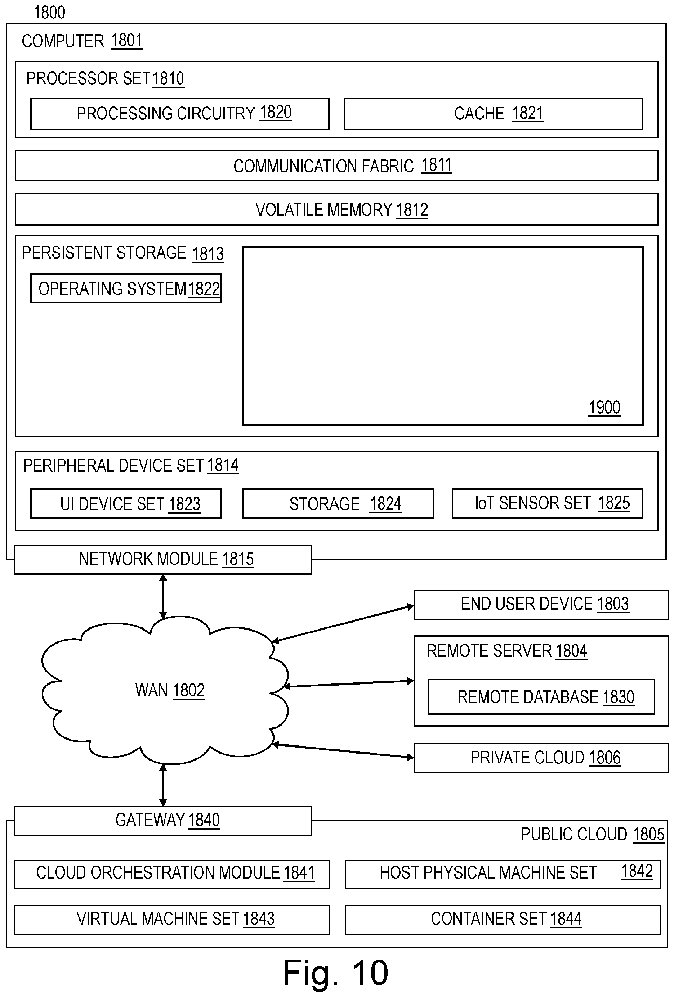

**Figure 1** is a diagram illustrating a computer system in accordance with an example of the present subject matter. The computer system 100 comprises a classical computer 101 and a quantum computer 102. An example implementation of the classical computer 101 is described with reference to Figure 10. The quantum computer 102 comprises ray qubits. For example, qubits are part of quantum registers 105.1 through 105.L. The classical computer 101 may be configured to control operation of the quantum computer 102. The classical computer 101 may use an interface 103 with the quantum computer 102 to control operation of the quantum computer 102 in accordance with an example of the present subject matter.

**Figure 2** is a flowchart of a method for providing access to a random variable in accordance with an example of the present subject matter. For the purpose of explanation, the method described in Figure 2 may be implemented in the system illustrated in Figure 1, but is not limited to this implementation. For example, the method of Figure 2 may be performed by the computer system 100 using one of the quantum registers 105.1 through 105.L. The set of qubits in the quantum register may define a quantum system.

The base states of the computational basis of the quantum system may be represented in step 201 by an ordered set of consecutive nonnegative integer numbers, referred to as a set of indexes

A random variable may be determined in step 203 in accordance with a predefined classical-quantum format. The random variable is valued in a finite domain of classical values such that each value of the domain is derived from a respective index of the set of indexes through an affine relationship. The affine relationship is defined by a scaling factor and an offset factor.

The set of qubits may be encoded in step 205 such that the probability of measuring a base state of the quantum system in the computational basis is the probability of observing the domain value associated with the index representing said measured base state when sampling the random variable. In other words, in step 205, the set of qubits may be encoded such that the probability of measuring a base state of the quantum system in the computational basis is the probability of obtaining the domain value associated with the index representing said measured base state, wherein the domain value is obtained by sampling the CEFV variable.

In one alternative implementation of the method of Figure 2, the alternative method may be performed for a set of ordered pairs instead of the random variable, where a first element of each ordered pair is a complex number, such that the sum of all the squared absolute values of the complex numbers across the set equals one, and a second element of each pair is a real number in a finite domain of classical values, the real number being derived from a respective index of the set of indexes through an affine relationship, the affine relationship being defined by a scaling factor and an offset factor. Indeed, the ordered pairs may be provided as a generalization of the random variable. In each ordered pair, the second element may play the role of the value taken by the random variable, while the squared absolute value of the first element represents the sampling probability associated with value. The alternative method may comprise steps 201. In addition, the alternative method may comprise the steps of determining a set of ordered pairs, where a first element of each ordered pair is a complex number, such that the sum of all the squared absolute values of the complex numbers across the set equals one, and a second element of each pair is a real number in a finite domain of classical values, the real number being derived from a respective index of the set of indexes through an affine relationship, the affine relationship being defined by a scaling factor and an offset factor; and a step of encoding the set of qubits to represent the set of ordered pairs, wherein the encoding is performed such that the quantum state is the complex linear combination of base states of the computational basis, where the coefficients of the linear combination are the first elements in the ordered pairs, and the base states of the computational basis are represented by the respective indexes, each index being the index in the set of indexes associated to the respective second element of the ordered pair. Using the ordered pairs may be beneficial as it may allow to exploit the invention as a subroutine in quantum algorithms designed to work on complex linear combination of base states of the computational basis.

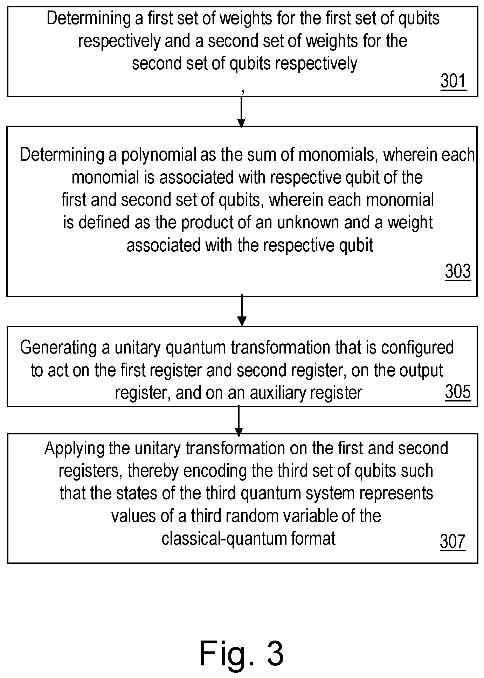

**Figure 3** is a flowchart of a method for adding two random variables in accordance with an example of the present subject matter. For the purpose of explanation, the method described in Figure 3 may be implemented in the system illustrated in Figure 1, but is not limited to this implementation. For example, the method of Figure 3 may be performed by the computer system 100.

For example, the method of Figure 3 may be performed by the computer system 100 using three quantum registers 105.1 through 105.L. The first and second quantum registers may be used to represent respectively first and second CEFV variables using the method of Figure 2. For example, the method of Figure 2 may be executed for each of the first and second quantum registers in order to provide the first and second CEFV variables. The third quantum register may be provided as an output quantum register for the method of Figure 3.

In step 301, a first set of weights may be determined for the first set of qubits respectively and a second set of weights may be determined for the second set of qubits respectively. The first set of weights and the second set of weights are determined such that the output quantum register after performing the sum represents a third random variable of the classical-quantum format. The first set of weights and the second set of weights are determined so that the output quantum register represents a third CEFV variable. The resulting third CEFV variable may be defined by a CEFV 3-tuple or a CEFV 5-tuple. A polynomial may be defined in step 303. The polynomial may be the sum of monomials, wherein each monomial is associated with respective qubit of the first and second set of qubits, wherein each monomial is defined as the product of an unknown and a weight associated with the respective qubit. In step 305, a unitary quantum transformation may be generated. The unitary quantum transformation is configured to act on the first and second quantum registers, on the output quantum register, and on an auxiliary register may be generated in order to evaluate the polynomial into the output quantum register. The unitary transformation may be applied in step 307 on the first and second quantum registers, thereby encoding in the third set of qubits such that the base states of the computational basis of the third quantum system represent values of a third random variable of the classical-quantum format.

In one example, the scaling factor, offset factor and possibly the tolerances may be defined for the third CEFV.

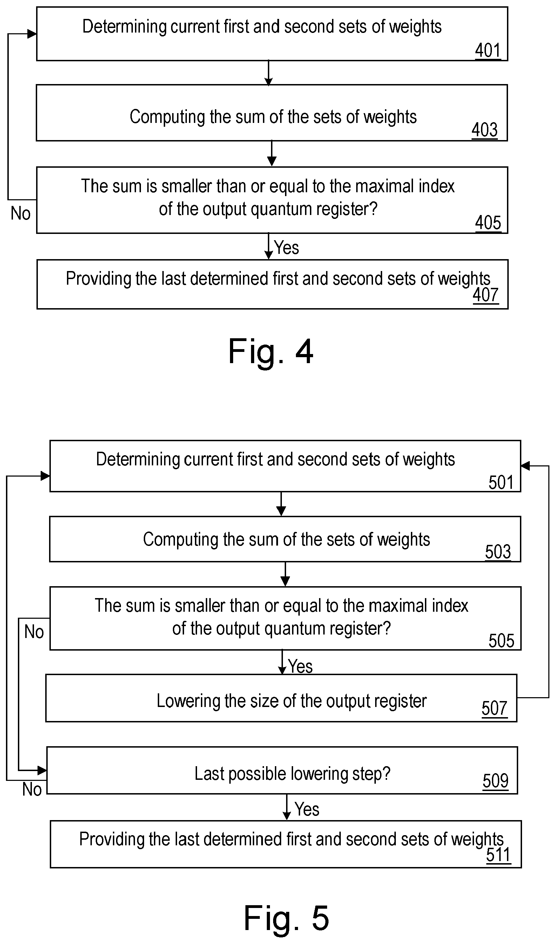

**Figure 4** is a flowchart of a method for determining the set of weights for the addition of two random variables in accordance with an example of the present subject matter. For the purpose of explanation, the method described in Figure 4 may be implemented in the system illustrated in Figure 1, but is not limited to this implementation. For example, the method of Figure 4 may be performed by the computer system 100.

In step 401) a current value of the first and second sets of weights may be provided. The first and second sets of weights may be randomly set, making sure that each of the first and second sets of weights is an integer. In step 403) the sum of the absolute value of the weights in the first and second sets of weights may be performed. In step 405) it may be determined whether the sum is smaller than or equal to the maximal index 2*^{n^{out}}* - 1 of the output quantum register. In case the sum is higher than the maximal index, steps 401) to 405) may be repeated (e.g., trying other values for the first and second sets of weights). In step 407) the last determined first and second sets of weights may be provided.

**Figure 5** is a flowchart of a method for determining the set of weights for the addition of two random variables in accordance with an example of the present subject matter. For the purpose of explanation, the method described in Figure 5 may be implemented in the system illustrated in Figure 1, but is not limited to this implementation. For example, the method of Figure 5 may be performed by the computer system 100.

In step 501 a current value of the first and second sets of weights may be provided. The first and second sets of weights may be randomly set, making sure that each of the first and second sets of weights is an integer. In step 503, the sum of the absolute value of the weights in the first and second sets of weights may be performed. In step 505, it may be determined whether the sum is smaller than or equal to the maximal index 2*^{n^{out}}* - 1 of the output quantum register. In case the sum is smaller than or equal to the maximal index, the size of the output quantum register may be lowered in step 507 and the method goes back to step 501. For example, the number of qubits of the output quantum register may be reduced in step 507 by a value such as one. In case the sum is higher than the maximal index, it may be determined in step 509 whether the number of times the condition of step 505 was not fulfilled is higher than a predefined threshold. If so, the last determined first and second sets of weights may be provided in step 511; otherwise, the method goes back to step 501 (e.g., trying other values for the weights).

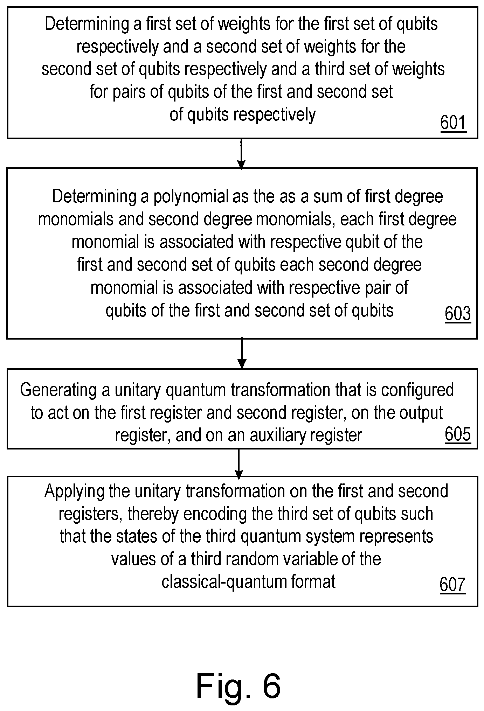

**Figure 6** is a flowchart of a method for multiplication of two random variables in accordance with an example of the present subject matter. For the purpose of explanation, the method described in Figure 6 may be implemented in the system illustrated in Figure 1, but is not limited to this implementation. For example, the method of Figure 6 may be performed by the computer system 100.

For example, the method of Figure 6 may be performed by the computer system 100 using three quantum registers 105.1 through 105.L. The first and second quantum registers may be used to represent respectively first and second CEFV variables using the method of Figure 2. For example, the method of Figure 2 may be executed for each of the first and second quantum registers in order to provide the first and second CEFV variables. The third quantum register may be provided as an output quantum register for the method of Figure 6.

In step 601, a determination of a first set of weights for the first set of qubits respectively, a second set of weights for the second set of qubits respectively and a third set of weights for the pairs of qubits of the first set and second set of qubits respectively may be performed. The determining of the three sets of weights may be performed such that the output quantum register after performing the multiplication represents a third random variable of the classical-quantum format. A polynomial may be defined in step 603. The polynomial may be defined as a sum of first degree monomials and second degree monomials. Each first degree monomial is associated with respective qubit of the first and second set of qubits. Each first degree monomial is defined as the product of an unknown and a weight associated with the respective qubit. Each second degree monomial is associated with respective pair of qubits of the first and second set of qubits, wherein each second degree monomial is defined as the product of a weight associated with the respective pair of qubits and two unknowns, respectively associated with the qubit in the first set of qubits and the qubit in the second set of qubits. In step 605, a unitary quantum transformation that is configured to act on the first quantum register and second quantum register, on the output quantum register, and on an auxiliary register may be generated in order to evaluate the polynomial into the output quantum register. The unitary transformation may be applied in step 607 on the first and second quantum registers, thereby encoding the third set of qubits such that the base states of the computational basis of the third quantum system represent values of a third random variable of the classical-quantum format.

In one example, the scaling factor, offset factor and possibly the tolerances may be defined for the third CEFV.

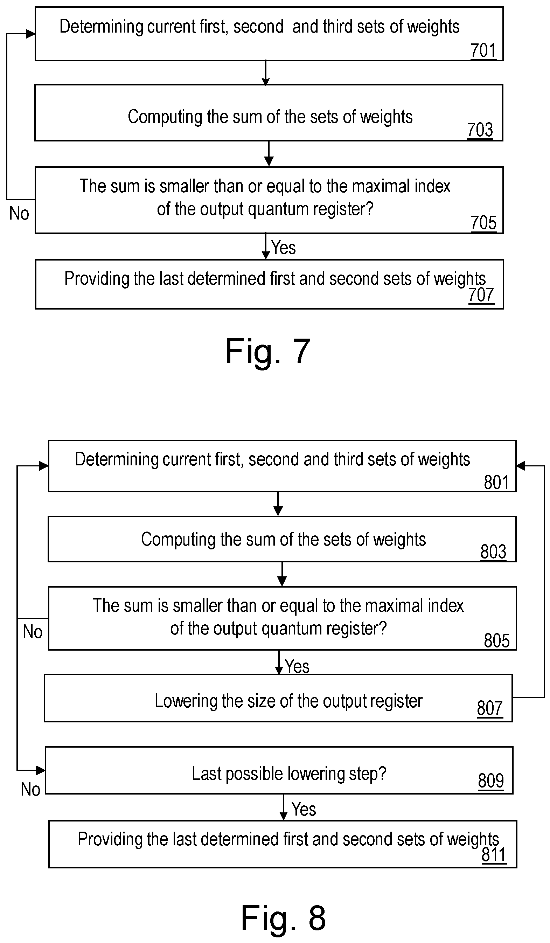

**Figure 7** is a flowchart of a method for determining the weights for the multiplication of two random variables in accordance with an example of the present subject matter. For the purpose of explanation, the method described in Figure 7 may be implemented in the system illustrated in Figure 1, but is not limited to this implementation. For example, the method of Figure 7 may be performed by the computer system 100.

In step 701) a current value of the first, second and third sets of weights may be provided. The first, second and third sets of weights may be randomly set, making sure that each of the first and second sets of weights is an integer. In step 703) the sum of the absolute value of the weights in the first and second and third sets of weights may be performed. In step 705) it may be determined whether the sum is smaller than or equal to the maximal index 2*^{n^{out}}* - 1 of the output quantum register. In case the sum is higher than the maximal index, steps 701) to 705) may be repeated (e.g., trying other values for the first and second sets of weights). In step 707) the last determined first, second and third sets of weights may be provided.

**Figure 8** is a flowchart of a method for determining the weights for the multiplication of two random variables in accordance with an example of the present subject matter. For the purpose of explanation, the method described in Figure 8 may be implemented in the system illustrated in Figure 1, but is not limited to this implementation. For example, the method of Figure 8 may be performed by the computer system 100.

In step 801 a current value of the first, second and third sets of weights may be provided. The first, second and third set of weights may be randomly set, making sure that each of the first and second sets of weights is an integer. In step 803, the sum of the absolute value of the weights in the first and second and third sets of weights may be performed. In step 805, it may be determined whether the sum is smaller than or equal to the maximal index 2*^{n^{out}}* - 1 of the output quantum register. In case the sum is smaller than or equal to the maximal index, the size of the output quantum register may be lowered in step 807 and the method goes back to step 801. For example, the number of qubits of the output quantum register may be reduced in step 507 by a value such as one. In case the sum is higher than the maximal index, it may be determined in step 809 whether the number of times the condition of step 805 was not fulfilled is higher than a predefined threshold. If so, the last determined first, second and third sets of weights may be provided in step 811; otherwise, the method goes back to step 801 (e.g., trying other values for the weights).

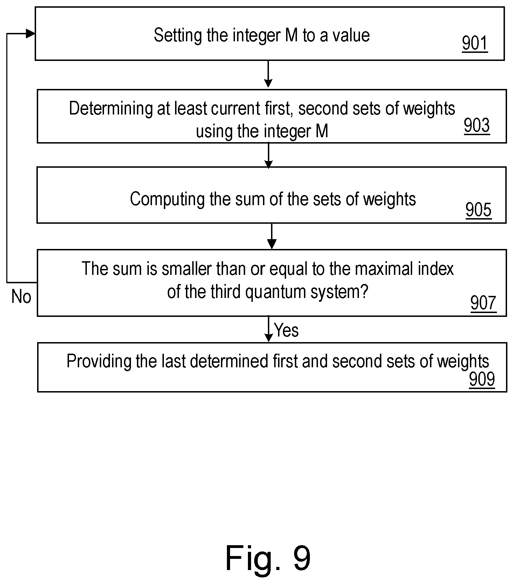

**Figure 9** is a flowchart of a method for determining weights for the addition of two random variables in accordance with an example of the present subject matter. For the purpose of explanation, the method described in Figure 9 may be implemented in the system illustrated in Figure 1, but is not limited to this implementation. For example, the method of Figure 9 may be performed by the computer system 100.

In this example, the determined weights for the qubits of the registers may include the integer number *M* as described above. In this case, the iterative method to find the weights may be executed as follows.

In step 901) a current value of the first and second sets of weights may be determined using the integer *M*. The first and second sets of weights may be randomly set in step 903, making sure that each of the first and second sets of weights is an integer. In step 905) the sum of the absolute value of the weights in the first and second sets of weights may be performed. In step 907) it may be determined whether the sum is smaller than or equal to the maximal index 2*^{n^{out}}* - 1 of the output quantum register. In case the sum is higher than the maximal index, steps 901) to 907) may be repeated (e.g., by decreasing the integer *M* by one). In step 909) the last determined first and second sets of weights may be provided.

In the following, an example mathematical modelling may be described. The mathematical modelling may describe the creation of the CEFV variable, the addition of two CEFV variables and the product of two CEFV variables.

The CEFV variable may be defined as follows. The CEFV variable is of length *n.* The CEFV variable is a tuple $F = \left(\left|.>,{D}_{a , b}^{fp},{g}_{a , b}^{fp},{ϵ}^{-},{ϵ}^{+}\right.\right)$ where $a ∈ ℝ$ is the offset, $b ∈ ℝ \ \left\{0\right\}$ is the scaling factor, *ε*⁻, *ε*⁺ ∈ [0, +∞) are the below and above errors respectively. The domain is the uniformly spaced grid ${D}_{a , b}^{fp} = \left\{a+bz\left|z∈\left\{0,I{, 2}^{n -}-1\right\}\right.\right\}$ , while the encoding is ${g}_{a , b}^{fp} \left(x\right) : = \frac{x - a}{b}$. Allowing a negative scaling factor, b < 0, may appear redundant. Nevertheless, it is encompassed as it may enable sign swap by simply adjusting the classical parameters, without any quantum state manipulation. In addition, two CEFV variables may insist on the same register |. >. This may be useful in algorithms to economize on the number of qubits. For instance, for adding a fixed number $c ∈ ℝ$ to a floating-point variable, it may be enough to create a new variable with a modified *aₒᵤₜ* = *a*ᵢₙ + c, without need to instantiate a new register. It may also be useful to interpret the same register both as an integer and as a floating point, by giving rise to two variables. More broadly, the quantum registers of two variables may share some of the qubits. A quantum algorithm, seen as a tool operating on quantum variables, may make calculations both by (re)defining CEFV variables, and by manipulating input states through quantum circuits.

In one example, the CEFV variables may be equipped with errors ε- and ε+ in order to keep track of the error propagation, as the computation of the sum and the product may be performed only up to a rounding error. This leads to the definition of compatibility between random variables and states as follows. Let *Y* be a random variable valued in any domain 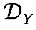 *,* and let $F = \left(\left|.>,{D}_{a , b}^{fp},{g}_{a , b}^{fp},{ϵ}^{-},{ϵ}^{+}\right.\right)$ be a CEFV variable of length *n,* and |*ψ* > an n-qubit state. Let *X* be the random variable ${g}_{a , b}^{fp}$-encoded by |*ψ* >. The random variable *Y* is said 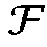 -compatible with the state |*ψ* > if *-ε⁻* ≤ *Y - X* ≤ *ε*⁺. For example, *Y* 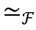 |*ψ >* means that |*ψ* > represents an approximation of *Y* under the encoding and the tolerances specified by 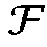 .

The following one is a first pseudocode of a function for adding two random variables in accordance with an example of the present subject matter.

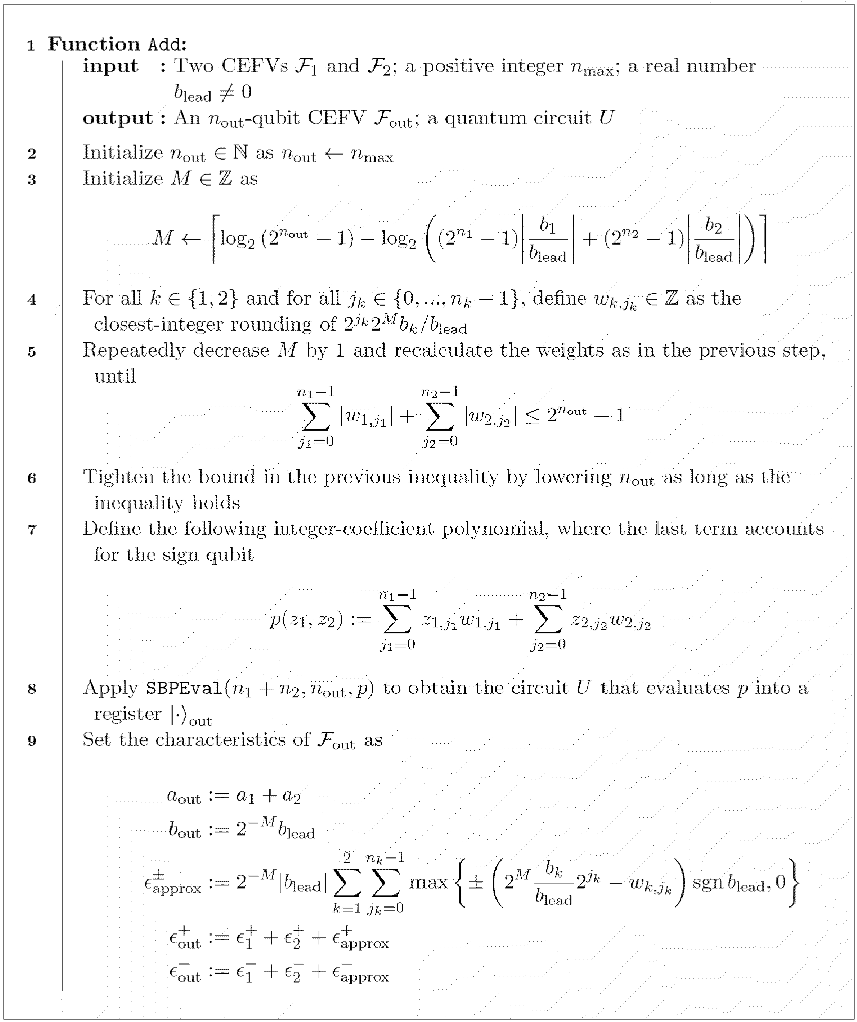

The first pseudocode represents an algorithm named "Algorithm 1". The algorithm is defined in a sequence of steps for performing the sum of two CEFV variables. The steps comprise a step 2 of initializing the number of qubits in the output quantum register, a step 3 of initializing the integer M in accordance with the definition shown in the first pseudocode, a step 4 of determining the weights using the integer M, a step 5 of checking the inequality shown in the first pseudocode, a step 6 to lower the number of qubits in the output quantum register, a step 7 of defining the polynomial, a step 8 of applying the unitary transformation by the function SBPEval(.) and a step 9 for providing the characteristics of the resulting CEFV variable e.g., the offset and scaling factors and the tolerance range. The mathematical modelling of this sum may be provided as follows.

*Let* 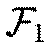 *and* 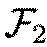 *be two CEFVs of size n*1 *and n*₂ *resp., where* ${F}_{j} = \left({\left|⋅\right〉}_{j},{D}_{{a}_{j} , {b}_{j}}^{fp}={D}_{j},{g}_{{a}_{j} , {b}_{j}}^{fp}={g}_{j},{ϵ}_{j}^{-},{ϵ}_{j}^{+}\right)$ *for j =* 1, 2. *Moreover, let n*ₘₐₓ *be a positive integer, and b*_{lead} *a non-null real number. Then Algorithm* 1 *outputs an n*ₒᵤₜ *-qubit CEFV* ${F}_{out} = \left({\left|⋅\right〉}_{out},{D}_{{a}_{out} , {b}_{out}}^{fp}={D}_{out},{g}_{{a}_{out} , {b}_{out}}^{fp}={g}_{out},{ϵ}_{out}^{-},{ϵ}_{out}^{+}\right)$ *and a quantum circuit U with the following characteristics:*
*(i)* ${n}_{out} \leq {n}_{max}$
*(ii) the width of U is at most n*₁ + *n*₂ + *n*ₒᵤₜ + 1
*(iii) in the basis made of 1*- *and 2-qubit gates, the gate count of U is* $O \left({n}_{out}^{2}+{n}_{out}\left({n}_{1}+{n}_{2}\right)\right)$
*(iv) for j* = 1, 2, *given any* ${y}_{j} ∈ ℝ$ *and xⱼ ∈* 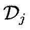 *such that* $- {ϵ}_{j}^{-} \leq {y}_{j} - {x}_{j} \leq {ϵ}_{j}^{+}$*, U behaves as follows:* $U \left|{g}_{1}\left({x}_{1}\right)\right〉 \left|{g}_{2}\left({x}_{2}\right)\right〉 \left|0\right〉 \left|0\right〉 = \left|{g}_{1}\left({x}_{1}\right)\right〉 \left|{g}_{2}\left({x}_{2}\right)\right〉 \left|{z}_{out}\right〉 \left|0\right〉$ *where zₒᵤₜ satisfies* $- {ϵ}_{out}^{-} \leq {y}_{1} + {y}_{2} - {g}_{out}^{- 1} \left({z}_{out}\right) \leq {ϵ}_{out}^{+} .$

*In other words,* ${x}_{out} : = {g}_{out}^{- 1} \left({z}_{out}\right)$ *approximates the sum of y*₁ *and y*₂*, within the tolerances of* 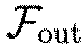 .

The statement of items (i), (ii) and (iii) may be easily proved mathematically using, for example, the results of the underlying SBPEval routine, as described for instance in R. Seidel, N. Tcholtchev, S. Bock, C. K.-U. Becker, and M. Hauswirth, "Efficient Floating Point Arithmetic for Quantum Computers," IEEE Access, vol. 10, pp. 72400-72415, 2022. Conversely (iv) can be proved as it follows: $\begin{matrix}{y}_{out} - {x}_{out} = \left({y}_{1}-{x}_{1}\right) + \left({y}_{2}-{x}_{2}\right) + \left({x}_{1}+{x}_{2}-{x}_{out}\right) \\ \leq {ϵ}_{1}^{+} + {ϵ}_{2}^{+} + \left({x}_{1}+{x}_{2}-{x}_{out}\right) ,\end{matrix}$

The choice of *nₒᵤₜ,* guarantees no overflow in the polynomial evaluation, so that ${z}_{out} = {\sum }_{{j}_{1} = 0}^{{n}_{1} - 1} {w}_{1 , {j}_{1}} {z}_{1 , {j}_{1}} + {\sum }_{{j}_{2} = 0}^{{n}_{2} - 1} {w}_{2 , {j}_{2}} {z}_{2 , {j}_{2}}$. Then $\begin{matrix}{x}_{1} + {x}_{2} - {x}_{out} = \left({a}_{1}+{b}_{1}{z}_{1}\right) + \left({a}_{2}+{b}_{2}{z}_{2}\right) - \left({a}_{1}+{a}_{2}+{b}_{out}{z}_{out}\right) \\ = \left({b}_{1}{z}_{1}+{b}_{2}{z}_{2}-{2}^{- M}{b}_{lead}{z}_{out}\right) \\ = {\sum }_{k = 1}^{2} \left({b}_{k}{z}_{k}-{2}^{- M}{b}_{lead}{\sum }_{{j}_{k} = 0}^{{n}_{k} - 1} {w}_{k , {j}_{k}} {z}_{k , {j}_{k}}\right) \\ = {2}^{- M} {b}_{lead} {\sum }_{k = 1}^{2} \left({2}^{M}\frac{{b}_{k}}{{b}_{lead}}{z}_{k}-{\sum }_{{j}_{k} = 0}^{{n}_{k} - 1} {w}_{k , {j}_{k}} {z}_{k , {j}_{k}}\right) \\ = {2}^{- M} {b}_{lead} {\sum }_{k = 1}^{2} {\sum }_{{j}_{k} = 0}^{{n}_{k} - 1} \left({2}^{M}\frac{{b}_{k}}{{b}_{lead}}{2}^{{j}_{k}}-{w}_{k , {j}_{k}}\right) {z}_{k , {j}_{k}} \\ \leq {2}^{- M} \left|{b}_{lead}\right| {\sum }_{k = 1}^{2} {\sum }_{{j}_{k} = 0}^{{n}_{k} - 1} max \left\{\left({2}^{M}\frac{{b}_{k}}{{b}_{lead}}{2}^{{j}_{k}}-{w}_{k , {j}_{k}}\right)sgn {b}_{lead},0\right\} .\end{matrix}$

The proof for ${ϵ}_{out}^{-}$ is similar.

The statements of items (i), (ii), (iii) and (iv) may hold for any [*w_{k,jₖ}*]*_{k,jₖ}*, however defined, as long as the no-overflow condition is guaranteed, namely the sum of the absolute value of the weights in the first set of weights and in the second set of weights is smaller than or equal to the maximal index 2*^{n^{out}}* - 1 of the output quantum register. The choice in step 4 of the first pseudocode may be optimal in the sense that (a) the integer *M* is calculated in such a way to fully exploit the precision achievable in *nₘₐₓ* qubits, (b) the definition of the weights minimizes and balances ${ϵ}_{approx}^{+}$ and ${ϵ}_{approx}^{-}$. Regarding (a), the initialization in step 3 of the first pseudocode guarantees that ${\sum }_{{j}_{1} = 0}^{{n}_{1} - 1} \left|{w}_{1 , {j}_{1}}\right| + {\sum }_{{j}_{2} = 0}^{{n}_{2} - 1} \left|{w}_{2 , {j}_{2}}\right| \leq {2}^{{n}_{out}} - 1$. And at the same time guarantees that step 5 of the first pseudocode requires few iterations

Hence, in order to sum two CEFVs, the offsets may be simply summed together, while states may be processed by a quantum circuit that keeps into account the scaling factors. More precisely, before applying a quantum addition algorithm, both registers may be aligned to the same scaling factor, *b_{lead}* as described with the algorithm of the first pseudocode. The rescaling factor for 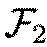 may be *b_{lead}*/*b*₂*,* and may be rounded to a binary fraction in order to fit into the representation possibilities of the target register. Said binary fraction is classically known, so that the sum of the two states in their respective scales, gets translated into a weighted sum between integers. The algorithm of the first pseudocode formalizes this approach in which an arbitrary *b_{lead}* is taken in input, and is further processed to output a *bₒᵤₜ* such that *bₒᵤₜ*/*b_{lead}* is a power of 2, with integer exponent, and *bₒᵤₜ* is optimized to exploit the available output binary digits for as many significant digits as possible.

In one example implementation of the algorithm of the first pseudocode, the target scale *b_{lead}* may be used as follow. Indeed, the choice of the target scale *b_{lead}* may both affect the approximation degree and the circuit complexity of the sum. For example, the target scale may be equal to the first scaling factor *b*₁ or equal to the second scaling factor *b*₂. In this way, the weights of the corresponding register become powers of 2, and the circuit may simplify significantly. The two choices *b_{lead}* = *b*₁ and *b_{lead}* = *b*₂ may be equally performant. The choice of *b_{lead}* may not only impact the performance of individual sum where it is introduced, but also defines the output variable, thus conditioning the cost of all subsequent interactions of the output itself.

In one example, the algorithm described in the first pseudocode may be improved as follow. (a) If all weights in both *w*₁ and *w*₂ share a common factor of 2, they can be divided by such factor that can be accounted classically, thus reducing the complexity of the circuit. (b) If once applying (a), the terms in the CEFV variable 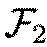 are all multiple of 2*^{l}*, for some positive integer *l*, and at the same time *w*_{1,*j*₁} = 2^{*j*¹} for all *j*₁ = 0, ..., *l* - 1, then the *l* least significant qubits of the sum may not be impacted by 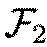 , and may be copied directly from the corresponding digits in 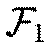 via CNOT gates. The condition on the weights *w*_{1,*j*₁} may be likely verified in practice, because it is implied by the choice of *b_{lead}* = *b*₁*.* (c) The previous improvement (b) may be rewritten in a more general form as follows: if only one input qubit of one input variable affects the least significant output variable, then it can be copied to the output variable via a CNOT gate, and then improvement (a) may be invoked again, recursively. (d) The rounding in step 4 of the first pseudocode may be modified to map a 0.5 decimal into 0 instead 1. This may not affect the error, but reduce weights. (e) An iteration of step 5 of first pseudocode is equivalent to rounding all weights to a power of 2. At the last iteration, a more refined technique may be to round only some weights; sufficiently many to satisfy the exit condition in step 5, but as little as possible to limit approximation.

In one example, for any given positive integer *L*, in the attempt to increase the result precision, it may be possible to calculate *L* additional binary digits by resorting to *L* ancilla qubits, and then uncompute these additional qubits by means of a subtraction modulo 2 *L*, before returning the result.

The following one is a second pseudocode of a function for multiplying two random variables in accordance with an example of the present subject matter.

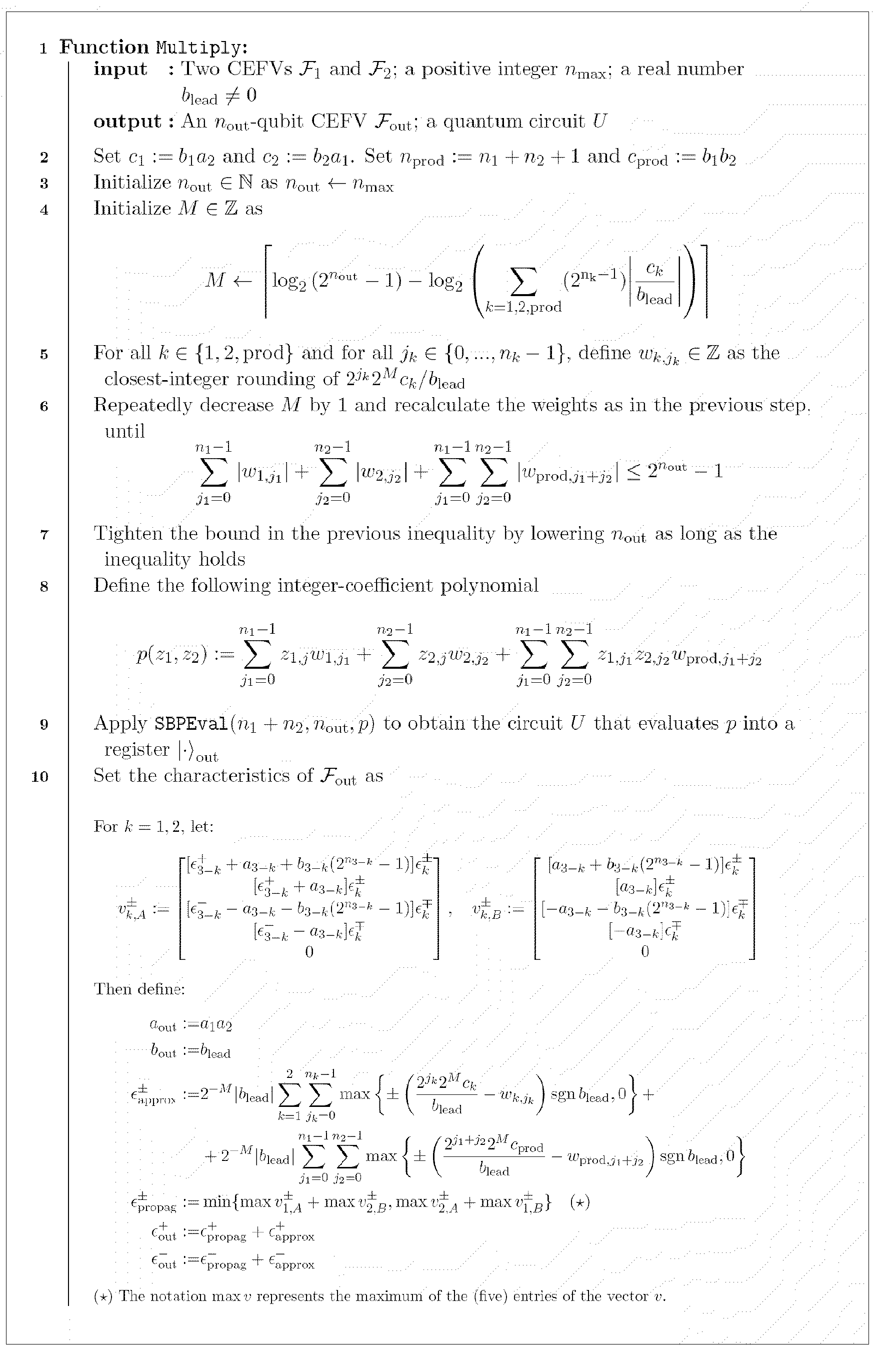

The second pseudocode represents an algorithm named "Algorithm 2". As shown in the second pseudocode, the algorithm is defined in a sequence of steps for performing the product of two CEFV variables. The steps comprise a step 2 of initializing rescaling factors *c*₁*, c₂* and *c_{prod},* a step 3 of initializing the number of qubits in the output quantum register, a step 4 of initializing the integer M in accordance with the definition shown in the second pseudocode, a step 5 of determining the weights using the integer M and the rescaling factors, a step 6 of checking the inequality shown in the second pseudocode, a step 7 to lower the number of qubits in the output quantum register, a step 8 of defining the polynomial, a step 9 of applying the unitary transformation by the function SBPEval(.) and a step 10 for providing the characteristics of the resulting CEFV variable e.g., the offset and scaling factors and the tolerance range. The mathematical modelling of this multiplication may be provided as follows.

*Let* 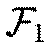 *and* 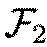 *be two CEFVs of size n*₁ and *n*₂ *resp., where* ${F}_{{j}_{_}} = \left({\left|⋅\right〉}_{j},{D}_{{{a}_{_}}_{j} , {{b}_{_}}_{j}}^{fp}={D}_{{j}_{_}},{g}_{{{a}_{_}}_{j} , {{b}_{_}}_{j}}^{fp}={g}_{{j}_{_}},{ϵ}_{j}^{-},{ϵ}_{j}^{+}\right)$ *for j* = 1, 2. *Moreover, let n*ₘₐₓ ≥ *n*₁*, n*₂. *Then Algorithm 2 outputs an n*ₒᵤₜ*-qubit CEFV* ${F}_{out} = \left({\left|⋅\right〉}_{out},{D}_{{a}_{out} , {b}_{out}}^{fp}={D}_{out},{g}_{{a}_{out} , {b}_{out}}^{fp}={g}_{out},{ϵ}_{out}^{-},{ϵ}_{out}^{+}\right)$ *and a quantum circuit U with the following characteristics:*
(i) ${n}_{out} \leq {n}_{max}$
(ii) *the width of U is at most n*₁ + *n₂ + n*ₒᵤₜ + 1
(iii) *in the basis made of 1- and 2-qubit gates, the gate count of U is* 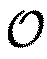 (*n*ₒᵤₜ*n*₁*n*₂)
*(iv) for j =* 1, 2, *given any* ${y}_{j} ∈ ℝ$ *and xⱼ* E 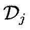 *such that* $- {ϵ}_{j}^{-} \leq {y}_{j} - {x}_{j} \leq {ϵ}_{j}^{+}$*, U behaves as follows:* $U \left|{g}_{1}\left({x}_{1}\right)\right〉 \left|{g}_{2}\left({x}_{2}\right)\right〉 \left|0\right〉 \left|0\right〉 = \left|{g}_{1}\left({x}_{1}\right)\right〉 \left|{g}_{2}\left({x}_{2}\right)\right〉 \left|{z}_{out}\right〉 \left|0\right〉$ *where z*ₒᵤₜ *satisfies* $- {ϵ}_{out}^{-} \leq {y}_{1} {y}_{2} - {g}_{out}^{- 1} \left({z}_{out}\right) \leq {ϵ}_{out}^{+} .$

*In other words,* ${x}_{out} : = {g}_{out}^{- 1} \left({z}_{out}\right)$ *approximates the product of y*₁ *and y*₂*, within the tolerances of* 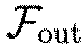 .

Hence, given two inputs *X*₁ = *a*₁ + *b*₁*Z*₁ and *X*₂ = *a*₂ + *b*₂*Z*₂, their product is *X*₁*X*₂ *= a*₁*a*₂ + *a*₁*b*₂*Z*₂ + *a*₂*b*₁*Z*₁ + *b*₁*b*₂*Z*₁Z₂*,* so that there is a way to compute the integer product *Z*₁*Z*₂. Algorithm 2 shows an implementation recurring to a single polynomial, which is more accurate than making the product *Z*₁*Z*₂ at first, and the sum afterwards.

Computing environment 1800 contains an example of an environment for the execution of at least some of the computer code involved in performing the inventive methods, such as a code 1900 for providing access to a quantum random variable e.g., performing the classical part of the computations involved in the definition of the quantum variable. In addition to block 1900, computing environment 1800 includes, for example, computer 1801, wide area network (WAN) 1802, end user device (EUD) 1803, remote server 1804, public cloud 1805, and private cloud 1806. In this embodiment, computer 1801 includes processor set 1810 (including processing circuitry 1820 and cache 1821), communication fabric 1811, volatile memory 1812, persistent storage 1813 (including operating system 1822 and block 1900, as identified above), peripheral device set 1814 (including user interface (UI) device set 1823, storage 1824, and Internet of Things (IoT) sensor set 1825), and network module 1815. Remote server 1804 includes remote database 1830. Public cloud 1805 includes gateway 1840, cloud orchestration module 1841, host physical machine set 1842, virtual machine set 1843, and container set 1844.

COMPUTER 1801 may take the form of a desktop computer, laptop computer, tablet computer, smart phone, smart watch or other wearable computer, mainframe computer, quantum computer or any other form of computer or mobile device that is capable of running a program, accessing a network or querying a database, such as remote database 1830. As is well understood in the art of computer technology, and depending upon the technology, performance of a computer-implemented method may be distributed among multiple computers and/or between multiple locations. On the other hand, in this presentation of computing environment 1800, detailed discussion is focused on a single computer, specifically computer 1801, to keep the presentation as simple as possible. Computer 1801 may be located in a cloud, even though it is not shown in a cloud in Figure 10. On the other hand, computer 1801 is not required to be in a cloud except to any extent as may be affirmatively indicated.

PROCESSOR SET 1810 includes one, or more, computer processors of any type. Processing circuitry 1820 may be distributed over multiple packages, for example, multiple, coordinated integrated circuit chips. Processing circuitry 1820 may implement multiple processor threads and/or multiple processor cores. Cache 1821 is memory that is located in the processor chip package(s) and is typically used for data or code that should be available for rapid access by the threads or cores running on processor set 1810. Cache memories are typically organized into multiple levels depending upon relative proximity to the processing circuitry. Alternatively, some, or all, of the cache for the processor set may be located "off chip." In some computing environments, processor set 1810 may be designed for working with qubits and performing quantum computing.

Computer readable program instructions are typically loaded onto computer 1801 to cause a series of operational steps to be performed by processor set 1810 of computer 1801 and thereby effect a computer-implemented method, such that the instructions thus executed will instantiate the methods specified in flowcharts and/or narrative descriptions of computer-implemented methods included in this document (collectively referred to as "the inventive methods"). These computer readable program instructions are stored in various types of computer readable storage media, such as cache 1821 and the other storage media discussed below. The program instructions, and associated data, are accessed by processor set 1810 to control and direct performance of the inventive methods. In computing environment 1800, at least some of the instructions for performing the inventive methods may be stored in block 1900 in persistent storage 1813.

COMMUNICATION FABRIC 1811 is the signal conduction path that allows the various components of computer 1801 to communicate with each other. Typically, this fabric is made of switches and electrically conductive paths, such as the switches and electrically conductive paths that make up busses, bridges, physical input / output ports and the like. Other types of signal communication paths may be used, such as fiber optic communication paths and/or wireless communication paths.

VOLATILE MEMORY 1812 is any type of volatile memory. Examples include dynamic type random access memory (RAM) or static type RAM. Typically, volatile memory 1812 is characterized by random access, but this is not required unless affirmatively indicated. In computer 1801, the volatile memory 1812 is located in a single package and is internal to computer 1801, but, alternatively or additionally, the volatile memory may be distributed over multiple packages and/or located externally with respect to computer 1801.

PERSISTENT STORAGE 1813 is any form of non-volatile storage for computers. The non-volatility of this storage means that the stored data is maintained regardless of whether power is being supplied to computer 1801 and/or directly to persistent storage 1813. Persistent storage 1813 may be a read only memory (ROM), but typically at least a portion of the persistent storage allows writing of data, deletion of data and re-writing of data. Some familiar forms of persistent storage include magnetic disks and solid state storage devices. Operating system 1822 may take several forms, such as various known proprietary operating systems or open source Portable Operating System Interface-type operating systems that employ a kernel. The code included in block 1900 typically includes at least some of the computer code involved in performing the inventive methods.

PERIPHERAL DEVICE SET 1814 includes the set of peripheral devices of computer 1801. Data communication connections between the peripheral devices and the other components of computer 1801 may be implemented in various ways, such as Bluetooth connections, Near-Field Communication (NFC) connections, connections made by cables (such as universal serial bus (USB) type cables), insertion-type connections (for example, secure digital (SD) card), connections made through local area communication networks and even connections made through wide area networks such as the internet. In various embodiments, UI device set 1823 may include components such as a display screen, speaker, microphone, wearable devices (such as goggles and smart watches), keyboard, mouse, printer, touchpad, game controllers, and haptic devices. Storage 1824 is external storage, such as an external hard drive, or insertable storage, such as an SD card. Storage 1824 may be persistent and/or volatile. In some embodiments, storage 1824 may take the form of a quantum computing storage device for storing data in the form of qubits. In embodiments where computer 1801 is required to have a large amount of storage (for example, where computer 1801 locally stores and manages a large database) then this storage may be provided by peripheral storage devices designed for storing very large amounts of data, such as a storage area network (SAN) that is shared by multiple, geographically distributed computers. IoT sensor set 1825 is made up of sensors that can be used in Internet of Things applications. For example, one sensor may be a thermometer and another sensor may be a motion detector.

NETWORK MODULE 1815 is the collection of computer software, hardware, and firmware that allows computer 1801 to communicate with other computers through WAN 1802. Network module 1815 may include hardware, such as modems or Wi-Fi signal transceivers, software for packetizing and/or de-packetizing data for communication network transmission, and/or web browser software for communicating data over the internet. In some embodiments, network control functions and network forwarding functions of network module 1815 are performed on the same physical hardware device. In other embodiments (for example, embodiments that utilize software-defined networking (SDN)), the control functions and the forwarding functions of network module 1815 are performed on physically separate devices, such that the control functions manage several different network hardware devices. Computer readable program instructions for performing the inventive methods can typically be downloaded to computer 1801 from an external computer or external storage device through a network adapter card or network interface included in network module 1815.

WAN 1802 is any wide area network (for example, the internet) capable of communicating computer data over non-local distances by any technology for communicating computer data. In some embodiments, the WAN 1802 may be replaced and/or supplemented by local area networks (LANs) designed to communicate data between devices located in a local area, such as a Wi-Fi network. The WAN and/or LANs typically include computer hardware such as copper transmission cables, optical transmission fibers, wireless transmission, routers, firewalls, switches, gateway computers and edge servers.

END USER DEVICE (EUD) 1803 is any computer system that is used and controlled by an end user (for example, a customer of an enterprise that operates computer 1801), and may take any of the forms discussed above in connection with computer 1801. EUD 1803 typically receives helpful and useful data from the operations of computer 1801. For example, in a hypothetical case where computer 1801 is designed to provide a recommendation to an end user, this recommendation would typically be communicated from network module 1815 of computer 1801 through WAN 1802 to EUD 1803. In this way, EUD 1803 can display, or otherwise present, the recommendation to an end user. In some embodiments, EUD 1803 may be a client device, such as thin client, heavy client, mainframe computer, desktop computer and so on.

REMOTE SERVER 1804 is any computer system that serves at least some data and/or functionality to computer 1801. Remote server 1804 may be controlled and used by the same entity that operates computer 1801. Remote server 1804 represents the machine(s) that collect and store helpful and useful data for use by other computers, such as computer 1801. For example, in a hypothetical case where computer 1801 is designed and programmed to provide a recommendation based on historical data, then this historical data may be provided to computer 1801 from remote database 1830 of remote server 1804.

PUBLIC CLOUD 1805 is any computer system available for use by multiple entities that provides on-demand availability of computer system resources and/or other computer capabilities, especially data storage (cloud storage) and computing power, without direct active management by the user. Cloud computing typically leverages sharing of resources to achieve coherence and economies of scale. The direct and active management of the computing resources of public cloud 1805 is performed by the computer hardware and/or software of cloud orchestration module 1841. The computing resources provided by public cloud 1805 are typically implemented by virtual computing environments that run on various computers making up the computers of host physical machine set 1842, which is the universe of physical computers in and/or available to public cloud 1805. The virtual computing environments (VCEs) typically take the form of virtual machines from virtual machine set 1843 and/or containers from container set 1844. It is understood that these VCEs may be stored as images and may be transferred among and between the various physical machine hosts, either as images or after instantiation of the VCE. Cloud orchestration module 1841 manages the transfer and storage of images, deploys new instantiations of VCEs and manages active instantiations of VCE deployments. Gateway 1840 is the collection of computer software, hardware, and firmware that allows public cloud 1805 to communicate through WAN 1802.

Some further explanation of virtualized computing environments (VCEs) will now be provided. VCEs can be stored as "images." A new active instance of the VCE can be instantiated from the image. Two familiar types of VCEs are virtual machines and containers. A container is a VCE that uses operating-system-level virtualization. This refers to an operating system feature in which the kernel allows the existence of multiple isolated user-space instances, called containers. These isolated user-space instances typically behave as real computers from the point of view of programs running in them. A computer program running on an ordinary operating system can utilize all resources of that computer, such as connected devices, files and folders, network shares, CPU power, and quantifiable hardware capabilities. However, programs running inside a container can only use the contents of the container and devices assigned to the container, a feature which is known as containerization.

PRIVATE CLOUD 1806 is similar to public cloud 1805, except that the computing resources are only available for use by a single enterprise. While private cloud 1806 is depicted as being in communication with WAN 1802, in other embodiments a private cloud may be disconnected from the internet entirely and only accessible through a local/private network. A hybrid cloud is a composition of multiple clouds of different types (for example, private, community or public cloud types), often respectively implemented by different vendors. Each of the multiple clouds remains a separate and discrete entity, but the larger hybrid cloud architecture is bound together by standardized or proprietary technology that enables orchestration, management, and/or data/application portability between the multiple constituent clouds. In this embodiment, public cloud 1805 and private cloud 1806 are both part of a larger hybrid cloud.

Various aspects of the present disclosure are described by narrative text, flowcharts, block diagrams of computer systems and/or block diagrams of the machine logic included in computer program product (CPP) embodiments. With respect to any flowcharts, depending upon the technology involved, the operations can be performed in a different order than what is shown in a given flowchart. For example, again depending upon the technology involved, two operations shown in successive flowchart blocks may be performed in reverse order, as a single integrated step, concurrently, or in a manner at least partially overlapping in time.

A computer program product embodiment ("CPP embodiment" or "CPP") is a term used in the present disclosure to describe any set of one, or more, storage media (also called "mediums") collectively included in a set of one, or more, storage devices that collectively include machine readable code corresponding to instructions and/or data for performing computer operations specified in a given CPP claim. A "storage device" is any tangible device that can retain and store instructions for use by a computer processor. The computer readable storage medium may be an electronic storage medium, a magnetic storage medium, an optical storage medium, an electromagnetic storage medium, a semiconductor storage medium, a mechanical storage medium, or any suitable combination of the foregoing. Some known types of storage devices that include these mediums include: diskette, hard disk, random access memory (RAM), read-only memory (ROM), erasable programmable read-only memory (EPROM or Flash memory), static random access memory (SRAM), compact disc read-only memory (CD-ROM), digital versatile disk (DVD), memory stick, floppy disk, mechanically encoded device (such as punch cards or pits / lands formed in a major surface of a disc) or any suitable combination of the foregoing. A computer readable storage medium, as that term is used in the present disclosure, is not to be construed as storage in the form of transitory signals per se, such as radio waves or other freely propagating electromagnetic waves, electromagnetic waves propagating through a waveguide, light pulses passing through a fiber optic cable, electrical signals communicated through a wire, and/or other transmission media. As will be understood by those of skill in the art, data is typically moved at some occasional points in time during normal operations of a storage device, such as during access, de-fragmentation or garbage collection, but this does not render the storage device as transitory because the data is not transitory while it is stored.

## Claims

1. A method for operating a computer system (100) comprising a classical computer (101) and a quantum computer (102), the classical computer (101) being configured to control the operation of the quantum computer (102) by using an interface (103) with the quantum computer (102), comprising:
- providing in the quantum computer (102) of the computer system a quantum register (105) storing a set of qubits defining a quantum system having a computational basis comprising a set of base states, a generic state of the quantum system being a linear combination of said set of base states, a coefficient of each base state in the linear combination corresponding to the square root of a probability of measuring the base state;
- providing (201) an ordered set of consecutive nonnegative integer indexes, each index being associated to a different respective one of the base states of the quantum register (105);
- providing a random variable valued in a finite domain of classical values, and having a probability distribution in the corresponding domain;
- mapping (203) each one of a finite set of domain values within said domain to a different respective one of the indexes of the set through a bijective affine transformation, said affine transformation providing for expressing each domain value of the set in function of the respective index through a scaling of said respective index and a offset applied to the scaled index, said scaling comprising multiplying said respective index by a scaling factor being a nonzero real number and said offset applied to the scaled index comprising an addition of a real number to said scaled index, wherein said real-numbers are classical contributions;
- representing **(205)** said random variable in the computer system through said quantum system, said representing said random variable comprising generating a quantum variable identifying a state of the quantum system, said generating the quantum variable comprising setting each coefficient of each base state to the square root of the value of the probability distribution at the domain value mapped to the index associated to said base state.

2. The method of claim 1, wherein said mapping **(203)** comprises:
- defining a tolerance range around each of the domain values of the set,
- approximating values of the random variable within the tolerance range around a corresponding domain value by the corresponding domain value, thereby values of the random variable within the tolerance range around a domain value of the set are mapped to the index to which said domain value of the set is mapped.

3. The method of claim 1 or 2, wherein:
- said quantum register **(105)** comprises:
- a first quantum register storing a first set of qubits defining a first quantum system having a first computational basis comprising a set of first base states, a generic state of the first quantum system being a linear combination of said set of first base states, a coefficient of each first base state in the linear combination corresponding to the square root of a probability of measuring the first base state;
- a second quantum register storing a second set of qubits defining a second quantum system having a second computational basis comprising a set of second base states, a generic state of the second quantum system being a linear combination of said set of second base states, a coefficient of each second base state in the linear combination corresponding to the square root of a probability of measuring the second base state
- said providing **(201)** an ordered set of consecutive nonnegative integer indexes comprises:
- providing a first ordered set of consecutive nonnegative integer first indexes, each first index being associated to a different respective one of the first base states;
- providing a second ordered set of consecutive nonnegative integer second indexes, each second index being associated to a different respective one of the second base states;
- said providing a random variable comprises providing a first and second independent random variables, said first random variable having a first probability distribution in a corresponding first domain, said second random variable having a second probability distribution in a corresponding second domain,
- said mapping **(203)** comprises:
- mapping each one of a finite set of first domain values within said first domain to a different respective one of the first indexes of the set through a bijective first affine transformation, said first affine transformation providing for expressing each first domain value of the set in function of the respective first index through a first scaling of said respective first index and a first offset applied to the scaled first index, and
- mapping each one of a finite set of second domain values within said second domain to a different respective one of the second indexes of the set through a bijective second affine transformation, said second affine transformation providing for expressing each second domain value of the set in function of the respective second index through a second scaling of said respective second index and a second offset applied to the scaled second index;
- said representing **(205)** said random variable in the computer system through said quantum system comprises:
- representing said first random variable in the computer system through said first quantum system, said representing said first random variable comprising generating a first quantum variable identifying a first state of the first quantum system, said generating the first quantum variable comprising setting each coefficient of each first base state to the square root of the value of the first probability distribution at the first domain value mapped to the first index associated to said first base state,
- representing said second random variable in the computer system through said second quantum system, said representing said second random variable comprising generating a second quantum variable identifying a second state of the second quantum system, said generating the second quantum variable comprising setting each coefficient of each second base state to the square root of the value of the second probability distribution at the second domain value mapped to the second index associated to said second base state;

4. The method of claim 1 or 2, wherein
- said random variable comprises a first and second dependent random variables;
- said probability distribution comprises a joint probability distribution in a first domain for the first random variable and in a second domain for the second random variable;
- said quantum register **(105)** comprises:
- a first quantum register storing a first set of qubits defining a first quantum system having a first computational basis comprising a set of first base states, a generic state of the first quantum system being a linear combination of said set of first base states, a coefficient of each first base state in the linear combination corresponding to the square root of a probability of measuring the first base state;
- a second quantum register storing a second set of qubits defining a second quantum system having a second computational basis comprising a set of second base states, a generic state of the second quantum system being a linear combination of said set of second base states, a coefficient of each second base state in the linear combination corresponding to the square root of a probability of measuring the second base state
- said providing **(201)** an ordered set of consecutive nonnegative integer indexes comprises:
- providing a first ordered set of consecutive nonnegative integer first indexes, each first index being associated to a different respective one of the first base states;
- providing a second ordered set of consecutive nonnegative integer second indexes, each second index being associated to a different respective one of the second base states;
- said mapping **(203)** comprises:
- mapping each one of a finite set of first domain values within said first domain to a different respective one of the first indexes of the set through a bijective first affine transformation, said first affine transformation providing for expressing each first domain value of the set in function of the respective first index through a first scaling of said respective first index and a first offset applied to the scaled first index, and
- mapping each one of a finite set of second domain values within said second domain to a different respective one of the second indexes of the set through a bijective second affine transformation, said second affine transformation providing for expressing each second domain value of the set in function of the respective second index through a second scaling of said respective second index and a second offset applied to the scaled second index;
- said representing **(205)** said random variable comprises representing said first and second dependent random variables in the computer system through a joint quantum system being the interconnection of said first quantum system with said second quantum system, and generating a joint quantum variable identifying a state of the j oint quantum system, a probability of measuring a state of the joint quantum system being set to a value of said joint probability distribution corresponding to a domain pair including a first domain value and a second domain value

5. The method of claim 3 or 4, further comprising determining a sum of the first and second random variables, the determining of the sum comprising:
- providing an output quantum register **(105)** storing a third set of qubits, thereby defining a third quantum system having a computational basis comprising a set of base states, said sum of the first and second random variables being determined as a third random variable represented in the computer system through said third quantum system, the state of the third quantum system in the computational basis representing a value of the third random variable based on a mapping, through a third affine relationship, of third domain values within a third domain of the third random variable to third indexes of third ordered set of consecutive nonnegative integer third indexes, each third index being associated to a different respective one of the third base states, said third affine relationship providing for expressing each third domain value in function of a respective third index through a third scaling of said respective third index and a third offset applied to the scaled third index,
- receiving a target scaling parameter identifying a target value for such third scaling;
- generating a first set of first weights associated to the first base states and a second set of second weights associated to the second base states by performing the following sequence of operations:
a) providing an integer M;
b) setting **(401)** current values for the first weights, each first weight being set to the closest integer rounding of a number in direct proportion to 2 to the first index of the first base associated to the first weight, in direct proportion to 2 to M, in direct proportion to the first scaling of the first index, and in inverse proportion to said target scaling parameter;
c) setting **(401)** current values for the second weights, each second weight being set to the closest integer rounding of a number in direct proportion to 2 to the second index of the second base associated to the second weight, in direct proportion to 2 to M, in direct proportion to the second scaling of the second index, and in inverse proportion to said target scaling parameter;
d) computing **(403)** the sum of the absolute value of the current first and second weights;
e) determining **(405)** whether the sum is smaller than or equal to a maximum third index;
f) in case the sum is higher than the maximum third index, decreasing M by 1 and repeating b) to e);
- associating first unknowns to each first base state of the first quantum system;
- associating second unknowns to each second base state of the second quantum system;
- providing a monomial for each unknown, the monomial comprising the unknown multiplied by the weight associated to the respective base state;
- defining **(303)** a polynomial as the sum of the monomials;
- providing **(305)** a quantum circuit having an input coupled to the first quantum register and to the second quantum register, and an output coupled to the output quantum register, the quantum circuit being configured to apply a quantum transformation for evaluating the polynomial into the output register by setting the first unknowns based on the first set of qubits of the first quantum system and by setting the second unknowns based on the second set of qubits of the second quantum system,
- applying **(307)** the quantum transformation on the first quantum register and second quantum register to evaluate the polynomial into the output quantum register.

6. The method of claim 5, further comprising:
- setting said third offset to the first offset plus the second offset;
- setting said third scaling to the value of the target scaling parameter multiplied by 2 to minus M.

7. The method of claim 5 or 6, wherein said integer M depends on:
- the first scaling;
- the second scaling;
- the value of the target scaling parameter;
- the number of qubits of the first set of qubits;
- the number of qubits of the second set of qubits;
- the number of qubits of the third set of qubits.

8. The method of any of claims 5 to 7, wherein said generating the first set of first weights and the second set of second weights further comprises lowering (507) the number of qubits in the third set of qubits to a closest number of the sum that is a power of two.

9. The method of claim 3 or 4, further comprising determining a multiplication of the first and second random variables, the determining of the multiplication comprising:
- providing an output quantum register **(105)** storing a third set of qubits, thereby defining a third quantum system having a computational basis comprising a set of base states, said multiplication of the first and second random variables being determined as a third random variable represented in the computer system through said third quantum system, the state of the third quantum system in the computational basis representing a value of the third random variable based on a mapping, through a third affine relationship, of third domain values within a third domain of the third random variable to third indexes of third ordered set of consecutive nonnegative integer third indexes, each third index being associated to a different respective one of the third base states, said third affine relationship providing for expressing each third domain value in function of a respective third index through a third scaling of said respective third index and a third offset applied to the scaled third index,
- receiving a target scaling parameter identifying a target value for such third scaling;
- generating a first set of first weights associated to the first base states, a second set of second weights associated to the second base states, and a third set of third weights associated to base state pairs each including a first base state and a second base state by performing the following sequence of operations:
g) providing an integer M;
h) setting **(701)** current values for the first weights, each first weight being set to the closest integer rounding of a number in direct proportion to 2 to the first index of the first base associated to the first weight, in direct proportion to 2 to M, in direct proportion to a number equal to the first scaling of the first index multiplied by the second offset, and in inverse proportion to said target scaling parameter;
i) setting **(701)** current values for the second weights, each second weight being set to the closest integer rounding of a number in direct proportion to 2 to the second index of the second base associated to the second weight, in direct proportion to 2 to M, in direct proportion to a number equal to the second scaling of the second index multiplied by the first offset, and in inverse proportion to said target scaling parameter;
j) setting **(701)** current values for the third weights, each third weight being set to the closest integer rounding of a number in direct proportion to 2 to an exponent value equal to the sum of the first and second indexes of the first and second base states of the base state pair associated to the third weight, in direct proportion to 2 to M, in direct proportion to a number equal to the first scaling of the first index multiplied by the second scaling of the second index, and in inverse proportion to said target scaling parameter;
k) computing **(703)** the sum of the absolute value of the current first, second and third weights;
l) determining **(705)** whether the sum is smaller than or equal to a maximum third index;
m) in case the sum is higher than the maximum third index, decreasing M by 1 and repeating h) to l);
- associating first unknowns to each first base state of the first quantum system;
- associating second unknowns to each second base state of the second quantum system;
- providing a first monomial for each first unknown, each first monomial comprising a first unknown multiplied by the first weight associated to the respective first base state;
- providing a second monomial for each second unknown, each second monomial comprising a second unknown multiplied by the second weight associated to the respective second base state;
- providing a third monomial for each of unknown pair including a pair of first and second unknowns, each third monomial comprising the product between:
- the first unknown of the pair;
- the second unknown of the pair;
- the third weight associated to the base state pair including the first base state associated to the first unknown of the unknown pair and the second base state associated to the second unknown of the unknown pair;
- defining **(603)** a polynomial as the sum of the first, second and third monomials;
- providing **(605)** a quantum circuit having an input coupled to the first quantum register and to the second quantum register, and an output coupled to the output quantum register, the quantum circuit being configured to apply a quantum transformation for evaluating the polynomial into the output register by setting the first unknowns based on the first set of qubits of the first quantum system and by setting the second unknowns based on the second set of qubits of the second quantum system,
- applying **(607)** the quantum transformation on the first quantum register and second quantum register to evaluate the polynomial into the output quantum register.

10. The method of claim 9, further comprising:
- setting said third offset to the first offset multiplied by the second offset;
- setting said third scaling to the value of the target scaling parameter.

11. The method of claim 9 or 10, wherein said integer M depends on:
- the first scaling;
- the second scaling;
- the value of the target scaling parameter;
- the number of qubits of the first set of qubits;
- the number of qubits of the second set of qubits;
- the number of qubits of the third set of qubits.

12. The method of any of claims 9 to 11, wherein said generating the first set of first weights, the second set of second weights and the third set of third weights further comprises lowering **(807)** the number of qubits in the third set of qubits to a closest number of the sum that is a power of two.

13. The method of any of claims 4 to 12, wherein said target scaling parameter has a value corresponding to one of said first scaling and said second scaling.

14. A computer system **(100),** comprising a classical computer **(101)** and a quantum computer **(102),** the classical computer **(101)** being configured to control the operation of the quantum computer **(102)** by using an interface **(103)** with the quantum computer, the quantum computer **(102)** comprising a quantum register **(105)** storing a set of qubits defining a quantum system having a computational basis comprising a set of base states, a generic state of the quantum system being a linear combination of said set of base states, a coefficient of each base state in the linear combination corresponding to the square root of a probability of measuring the base state, the computer system being configured to:
- provide an ordered set of consecutive nonnegative integer indexes, each index being associated to a different respective one of the base states of the quantum register **(105);**
- provide a random variable valued in a finite domain of classical values, and having a probability distribution in the corresponding domain;
- map each one of a finite set of domain values within said domain to a different respective one of the indexes of the set through a bijective affine transformation, said affine transformation providing for expressing each domain value of the set in function of the respective index through a scaling of said respective index and a offset applied to the scaled index, said scaling comprising multiplying said respective index by a scaling factor being a non-zero real number and said offset applied to the scaled index comprising an addition of a real number to said scaled index, wherein said real numbers are classical contributions;
- represent said random variable in the computer system through said quantum system, said representing said random variable comprising generating a quantum variable identifying a state of the quantum system, said generating the quantum variable comprising setting each coefficient of each base state to the square root of the value of the probability distribution at the domain value mapped to the index associated to said base state.

15. A computer program configured for causing a computer system **(100)** to perform the method according to any of claims 1 to 13 when the computer program is executed on the computer system, wherein said computer system **(100)** comprises a classical computer **(101)** and a quantum computer **(102).**

## Patentansprüche

1. Verfahren zum Betreiben eines Computersystems (100), umfassend einen klassischen Computer (101) und einen Quantencomputer (102), wobei der klassische Computer (101) konfiguriert ist, um den Betrieb des Quantencomputers (102) unter Verwendung einer Schnittstelle (103) mit dem Quantencomputer (102) zu steuern, umfassend:
- Bereitstellen in dem Quantencomputer (102) des Computersystems, eines Quantenregisters (105), das eine Menge von Qubits speichert, die ein Quantensystem definieren, das eine Rechenbasis aufweist, die eine Menge von Basiszuständen umfasst, wobei ein allgemeiner Zustand des Quantensystems eine Linearkombination der Menge von Basiszuständen ist, ein Koeffizient jedes Basiszustands in der Linearkombination der Quadratwurzel einer Wahrscheinlichkeit eines Messens des Basiszustands entspricht;
- Bereitstellen (201) einer geordneten Menge aufeinanderfolgender nichtnegativer ganzzahliger Indizes, wobei jeder Index mit einem jeweils anderen der Basiszustände des Quantenregisters (105) assoziiert ist;
- Bereitstellen einer Zufallsvariable, die Werte in einem endlichen Bereich klassischer Werte annimmt und eine Wahrscheinlichkeitsverteilung in dem entsprechenden Bereich aufweist;
- Zuordnen (203) jedes einzelnen einer endlichen Menge von Domänenwerten innerhalb der Domäne zu einem jeweils anderen der Indizes der Menge durch eine bijektive affine Transformation, wobei die affine Transformation ein Ausdrücken jedes Domänenwerts der Menge abhängig von dem jeweiligen Index durch ein Skalieren des jeweiligen Index und einen Versatz, der auf den skalierten Index angewendet wird, bereitstellt, das Skalieren umfassend ein Multiplizieren des jeweiligen Index mit einem Skalierungsfaktor, der eine von Null verschiedene reelle Zahl ist, und der Versatz, der auf den skalierten Index angewendet wird, umfassend eine Addition einer reellen Zahl zu dem skalierten Index, wobei die reellen Zahlen klassische Beiträge sind;
- Darstellen (205) der Zufallsvariablen in dem Computersystem über das Quantensystem, das Darstellen der Zufallsvariablen umfassend ein Generieren einer Quantenvariablen, die einen Zustand des Quantensystems identifiziert, das Generieren der Quantenvariablen umfassend ein Setzen jedes Koeffizienten von jedem Basiszustand auf die Quadratwurzel des Werts der Wahrscheinlichkeitsverteilung bei dem Domänenwert, der dem Index zugeordnet ist, der mit dem Basiszustand assoziiert ist.

2. Verfahren nach Anspruch 1, wobei das Zuordnen (203) Folgendes umfasst:
- Definieren eines Toleranzbereichs um jeden der Domänenwerte der Menge,
- Annähern von Werten der Zufallsvariablen innerhalb des Toleranzbereichs um einen entsprechenden Domänenwert durch den entsprechenden Domänenwert, wodurch Werte der Zufallsvariablen innerhalb des Toleranzbereichs um einen Domänenwert der Menge dem Index zugeordnet werden, dem der Domänenwert der Menge zugeordnet ist.

3. Verfahren nach Anspruch 1 oder 2, wobei:
- das Quantenregister (105) Folgendes umfasst:
- ein erstes Quantenregister, das eine erste Menge von Qubits speichert, die ein erstes Quantensystem definieren, das eine erste Rechenbasis aufweist, die eine Menge von ersten Basiszuständen umfasst, wobei ein allgemeiner Zustand des ersten Quantensystems eine Linearkombination der Menge von ersten Basiszuständen ist, ein Koeffizient jedes ersten Basiszustands in der Linearkombination der Quadratwurzel einer Wahrscheinlichkeit eines Messens des ersten Basiszustands entspricht;
- ein zweites Quantenregister, das eine zweite Menge von Qubits speichert, die ein zweites Quantensystem definieren, das eine zweite Rechenbasis aufweist, die eine Menge von zweiten Basiszuständen umfasst, wobei ein allgemeiner Zustand des zweiten Quantensystems eine Linearkombination der Menge von zweiten Basiszuständen ist, ein Koeffizient jedes zweiten Basiszustands in der Linearkombination der Quadratwurzel einer Wahrscheinlichkeit eines Messens des zweiten Basiszustands entspricht;
- wobei das Bereitstellen (201) einer geordneten Menge aufeinanderfolgender nichtnegativer ganzzahliger Indizes Folgendes umfasst:
- Bereitstellen einer ersten geordneten Menge aufeinanderfolgender nichtnegativer ganzzahliger erster Indizes, wobei jeder erste Index mit einem jeweils anderen der ersten Basiszustände assoziiert ist;
- Bereitstellen einer zweiten geordneten Menge aufeinanderfolgender nichtnegativer ganzzahliger zweiter Indizes, wobei jeder zweite Index mit einem jeweils anderen der zweiten Basiszustände assoziiert ist;
- wobei ein Bereitstellen einer Zufallsvariablen ein Bereitstellen einer ersten und einer zweiten unabhängigen Zufallsvariablen umfasst, die erste Zufallsvariable eine erste Wahrscheinlichkeitsverteilung in einer entsprechenden ersten Domäne aufweist, die zweite Zufallsvariable eine zweite Wahrscheinlichkeitsverteilung in einer entsprechenden zweiten Domäne aufweist,
- wobei das Zuordnen (203) Folgendes umfasst:
- Zuordnen jedes einzelnen einer endlichen Menge von ersten Domänenwerten innerhalb der ersten Domäne zu einem jeweils anderen der ersten Indizes der Menge durch eine erste bijektive affine Transformation, wobei die erste affine Transformation ein Ausdrücken jedes ersten Domänenwerts der Menge abhängig von dem jeweiligen ersten Index durch ein erstes Skalieren des jeweiligen ersten Index und einen ersten Versatz, der auf den skalierten ersten Index angewendet wird, bereitstellt,
- Zuordnen jedes einzelnen einer endlichen Menge von zweiten Domänenwerten innerhalb der zweiten Domäne zu einem jeweils anderen der zweiten Indizes der Menge durch eine bijektive zweite affine Transformation, wobei die zweite affine Transformation ein Ausdrücken jedes zweiten Domänenwerts der Menge abhängig von dem jeweiligen zweiten Index durch ein zweites Skalieren des jeweiligen zweiten Index und einen zweiten Versatz, der auf den skalierten zweiten Index angewendet wird, bereitstellt,
- wobei ein Darstellen (205) der Zufallsvariablen in dem Computersystem über das Quantensystem Folgendes umfasst:
- Darstellen der ersten Zufallsvariablen in dem Computersystem über das erste Quantensystem, das Darstellen der ersten Zufallsvariablen umfassend ein Generieren einer ersten Quantenvariablen, die einen ersten Zustand des ersten Quantensystems identifiziert, das Generieren der ersten Quantenvariablen umfassend ein Setzen jedes Koeffizienten von jedem ersten Basiszustand auf die Quadratwurzel des Werts der ersten Wahrscheinlichkeitsverteilung bei dem ersten Domänenwert, der dem ersten Index zugeordnet ist, der mit dem ersten Basiszustand assoziiert ist;
- Darstellen der zweiten Zufallsvariablen in dem Computersystem über das zweite Quantensystem, das Darstellen der zweiten Zufallsvariablen umfassend ein Generieren einer zweiten Quantenvariablen, die einen zweiten Zustand des zweiten Quantensystems identifiziert, das Generieren der zweiten Quantenvariablen umfassend ein Setzen jedes Koeffizienten von jedem zweiten Basiszustand auf die Quadratwurzel des Werts der zweiten Wahrscheinlichkeitsverteilung bei dem zweiten Domänenwert, der dem zweiten Index zugeordnet ist, der mit dem zweiten Basiszustand assoziiert ist;

4. Verfahren nach Anspruch 1 oder 2, wobei
- die Zufallsvariable eine erste und eine zweite abhängige Zufallsvariable umfasst;
- die Wahrscheinlichkeitsverteilung eine gemeinsame Wahrscheinlichkeitsverteilung in einer ersten Domäne für die erste Zufallsvariable und in einer zweiten Domäne für die zweite Zufallsvariable umfasst;
- das Quantenregister (105) Folgendes umfasst:
- ein erstes Quantenregister, das eine erste Menge von Qubits speichert, die ein erstes Quantensystem definieren, das eine erste Rechenbasis aufweist, die eine Menge von ersten Basiszuständen umfasst, wobei ein allgemeiner Zustand des ersten Quantensystems eine Linearkombination der Menge von ersten Basiszuständen ist, ein Koeffizient jedes ersten Basiszustands in der Linearkombination der Quadratwurzel einer Wahrscheinlichkeit eines Messens des ersten Basiszustands entspricht;
- ein zweites Quantenregister, das eine zweite Menge von Qubits speichert, die ein zweites Quantensystem definieren, das eine zweite Rechenbasis aufweist, die eine Menge von zweiten Basiszuständen umfasst, wobei ein allgemeiner Zustand des zweiten Quantensystems eine Linearkombination der Menge von zweiten Basiszuständen ist, ein Koeffizient jedes zweiten Basiszustands in der Linearkombination der Quadratwurzel einer Wahrscheinlichkeit eines Messens des zweiten Basiszustands entspricht;
- wobei das Bereitstellen (201) einer geordneten Menge aufeinanderfolgender nichtnegativer ganzzahliger Indizes Folgendes umfasst:
- Bereitstellen einer ersten geordneten Menge aufeinanderfolgender nichtnegativer ganzzahliger erster Indizes, wobei jeder erste Index mit einem jeweils anderen der ersten Basiszustände assoziiert ist;
- Bereitstellen einer zweiten geordneten Menge aufeinanderfolgender nichtnegativer ganzzahliger zweiter Indizes, wobei jeder zweite Index mit einem jeweils anderen der zweiten Basiszustände assoziiert ist;
- wobei das Zuordnen (203) Folgendes umfasst:
- Zuordnen jedes einzelnen einer endlichen Menge von ersten Domänenwerten innerhalb der ersten Domäne zu einem jeweils anderen der ersten Indizes der Menge durch eine erste bijektive affine Transformation, wobei die erste affine Transformation ein Ausdrücken jedes ersten Domänenwerts der Menge abhängig von dem jeweiligen ersten Index durch ein erstes Skalieren des jeweiligen ersten Index und einen ersten Versatz, der auf den skalierten ersten Index angewendet wird, bereitstellt,
- Zuordnen jedes einzelnen einer endlichen Menge von zweiten Domänenwerten innerhalb der zweiten Domäne zu einem jeweils anderen der zweiten Indizes der Menge durch eine bijektive zweite affine Transformation, wobei die zweite affine Transformation ein Ausdrücken jedes zweiten Domänenwerts der Menge abhängig von dem jeweiligen zweiten Index durch ein zweites Skalieren des jeweiligen zweiten Index und einen zweiten Versatz, der auf den skalierten zweiten Index angewendet wird, bereitstellt,
- wobei ein Darstellen (205) der Zufallsvariablen ein Darstellen der ersten und der zweiten abhängigen Zufallsvariablen in dem Computersystem über ein gemeinsames Quantensystem, das die Verbindung des ersten Quantensystems mit dem zweiten Quantensystem ist, und ein Generieren einer gemeinsamen Quantenvariablen, die einen Zustand des gemeinsamen Quantensystems identifiziert, umfasst, eine Wahrscheinlichkeit eines Messens eines Zustands des gemeinsamen Quantensystems auf einen Wert der gemeinsamen Wahrscheinlichkeitsverteilung gesetzt wird, der einem Domänenpaar entspricht, das einen ersten Domänenwert und einen zweiten Domänenwert beinhaltet.

5. Verfahren nach Anspruch 3 oder 4, ferner umfassend ein Bestimmen einer Summe der ersten und der zweiten Zufallsvariablen, wobei das Bestimmen der Summe Folgendes umfasst:
- Bereitstellen eines Ausgangs-Quantenregisters (105), das eine dritte Menge von Qubits speichert, wodurch ein drittes Quantensystem definiert wird, das eine Rechenbasis aufweist, die eine Menge von Basiszuständen umfasst, wobei die Summe der ersten und der zweiten Zufallsvariablen als eine dritte Zufallsvariable bestimmt wird, die in dem Computersystem über das dritte Quantensystem dargestellt wird, der Zustand des dritten Quantensystems in der Rechenbasis einen Wert der dritten Zufallsvariablen basierend auf einer Zuordnung, über eine dritte affine Beziehung, von dritten Domänenwerten innerhalb einer dritten Domäne der dritten Zufallsvariablen zu dritten Indizes einer dritten geordneten Menge aufeinanderfolgender nichtnegativer ganzzahliger dritter Indizes darstellt, wobei jeder dritte Index mit einem jeweils anderen der dritten Basiszustände assoziiert ist, wobei die dritte affine Beziehung ein Ausdrücken jedes dritten Domänenwerts der Menge abhängig von dem jeweiligen dritten Index durch ein drittes Skalieren des jeweiligen dritten Index und einen dritten Versatz, der auf den skalierten dritten Index angewendet wird, bereitstellt,
- Empfangen eines Soll-Skalierungsparameters, der einen Soll-Wert für ein solches drittes Skalieren identifiziert;
- Generieren einer ersten Menge von ersten Gewichten, die mit den ersten Basiszuständen assoziiert sind, und einer zweiten Menge von zweiten Gewichten, die mit den zweiten Basiszuständen assoziiert sind, durch Durchführen der folgenden Abfolge von Operationen:
a) Bereitstellen einer ganzen Zahl M;
b) Setzen (401) aktueller Werte für die ersten Gewichte, wobei jedes erste Gewicht auf die nächstliegende ganzzahlige Rundung einer Zahl gesetzt wird, die direkt proportional zu 2 hoch dem ersten Index der ersten Basis, die mit dem ersten Gewicht assoziiert ist, direkt proportional zu 2 hoch M, direkt proportional zu dem ersten Skalieren des ersten Index und umgekehrt proportional zu dem Soll-Skalierungsparameter ist;
c) Setzen (401) aktueller Werte für die zweiten Gewichte, wobei jedes zweite Gewicht auf die nächstliegende ganzzahlige Rundung einer Zahl gesetzt wird, die direkt proportional zu 2 hoch dem zweiten Index der zweiten Basis, die mit dem zweiten Gewicht assoziiert ist, direkt proportional zu 2 hoch M, direkt proportional zu dem zweiten Skalieren des zweiten Index und umgekehrt proportional zu dem Soll-Skalierungsparameter ist;
d) Berechnen (403) der Summe des Absolutwerts des aktuellen ersten und zweiten Gewichts;
e) Bestimmen (405), ob die Summe kleiner als oder gleich wie ein maximaler dritter Index ist;
f) wenn die Summe größer ist als der maximale dritte Index, Verringern von M um 1 und Wiederholen der Schritte b) bis e);
- Assoziieren erster Unbekannter mit jedem ersten Basiszustand des ersten Quantensystems;
- Assoziieren zweiter Unbekannter mit jedem zweiten Basiszustand des zweiten Quantensystems;
- Bereitstellen eines Monoms für jede Unbekannte, das Monom umfassend die Unbekannte multipliziert mit dem Gewicht, das mit dem jeweiligen Basiszustand assoziiert ist;
- Definieren (303) eines Polynoms als die Summe der Monome;
- Bereitstellen (305) einer Quantenschaltung, die einen mit dem ersten Quantenregister und dem zweiten Quantenregister gekoppelten Eingang und einen mit dem Ausgangs-Quantenregister gekoppelten Ausgang aufweist, wobei die Quantenschaltung konfiguriert ist, um eine Quantentransformation zum Bewerten des Polynoms in ein Ausgaberegister anzuwenden, indem sie die ersten Unbekannten basierend auf der ersten Menge von Qubits des ersten Quantensystems setzt, und indem sie die zweiten Unbekannten basierend auf der zweiten Menge von Qubits des zweiten Quantensystems setzt,
- Anwenden (307) der Quantentransformation auf das erste und das zweite Quantenregister, um das Polynom in das Ausgangs-Quantenregister zu bewerten.

6. Verfahren nach Anspruch 5, ferner umfassend:
- Setzen des dritten Versatzes auf den ersten Versatz plus den zweiten Versatz;
- Setzen des dritten Skalierens auf den Wert des Soll-Skalierungsparameters, multipliziert mit 2 bis minus M.

7. Verfahren nach Anspruch 5 oder 6, wobei die ganze Zahl M von Folgendem abhängt:
- dem ersten Skalieren;
- dem zweiten Skalieren;
- dem Wert des Soll-Skalierungsparameters;
- der Menge von Qubits der ersten Menge von Qubits;
- der Menge von Qubits der zweiten Menge von Qubits;
- der Menge von Qubits der dritten Menge von Qubits;

8. Verfahren nach einem der Ansprüche 5 bis 7, wobei das Generieren der ersten Menge von ersten Gewichten und der zweiten Menge von zweiten Gewichten ferner ein Verringern (507) der Anzahl von Qubits in der dritten Menge von Qubits auf eine Anzahl umfasst, die der Summe am nächsten ist, die eine Zweierpotenz ist.

9. Verfahren nach Anspruch 3 oder 4, ferner umfassend eine Multiplikation der ersten und der zweiten Zufallsvariablen, wobei das Bestimmen der Multiplikation Folgendes umfasst:
- Bereitstellen eines Ausgangs-Quantenregisters (105), das eine dritte Menge von Qubits speichert, wodurch ein drittes Quantensystem definiert wird, das eine Rechenbasis aufweist, die eine Menge von Basiszuständen umfasst, wobei die Multiplikation der ersten und der zweiten Zufallsvariablen als eine dritte Zufallsvariable bestimmt wird, die in dem Computersystem über das dritte Quantensystem dargestellt wird, der Zustand des dritten Quantensystems in der Rechenbasis einen Wert der dritten Zufallsvariablen basierend auf einer Zuordnung, über eine dritte affine Beziehung, von dritten Domänenwerten innerhalb einer dritten Domäne der dritten Zufallsvariablen zu dritten Indizes einer dritten geordneten Menge aufeinanderfolgender nichtnegativer ganzzahliger dritter Indizes darstellt, wobei jeder dritte Index mit einem jeweils anderen der dritten Basiszustände assoziiert ist, wobei die dritte affine Beziehung ein Ausdrücken jedes dritten Domänenwerts der Menge abhängig von dem jeweiligen dritten Index durch ein drittes Skalieren des jeweiligen dritten Index und einen dritten Versatz, der auf den skalierten dritten Index angewendet wird, bereitstellt,
- Empfangen eines Soll-Skalierungsparameters, der einen Soll-Wert für ein solches drittes Skalieren identifiziert;
- Generieren einer ersten Menge von ersten Gewichten, die mit den ersten Basiszuständen assoziiert sind, einer zweiten Menge von zweiten Gewichten, die mit den zweiten Basiszuständen assoziiert sind, und einer dritten Menge von dritten Gewichten, die mit Basiszustandspaaren assoziiert sind, die jeweils einen ersten Basiszustand und einen zweiten Basiszustand beinhalten, durch Durchführen der folgenden Abfolge von Operationen:
g) Bereitstellen einer ganzen Zahl M;
h) Setzen (701) aktueller Werte für die ersten Gewichte, wobei jedes erste Gewicht auf die nächstliegende ganzzahlige Rundung einer Zahl gesetzt wird, die direkt proportional zu 2 hoch dem ersten Index der ersten Basis, die mit dem ersten Gewicht assoziiert ist, direkt proportional zu 2 hoch M, direkt proportional zu einer Anzahl gleich dem ersten Skalieren des ersten Index multipliziert mit dem zweiten Versatz und umgekehrt proportional zu dem Soll-Skalierungsparameter ist;
i) Setzen (701) aktueller Werte für die zweiten Gewichte, wobei jedes zweite Gewicht auf die nächstliegende ganzzahlige Rundung einer Zahl gesetzt wird, die direkt proportional zu 2 hoch dem zweiten Index der zweiten Basis, die mit dem zweiten Gewicht assoziiert ist, direkt proportional zu 2 hoch M, direkt proportional zu einer Anzahl gleich dem zweiten Skalieren des zweiten Index multipliziert mit dem ersten Versatz und umgekehrt proportional zu dem Soll-Skalierungsparameter ist;
j) Setzen (701) aktueller Werte für die dritten Gewichte, wobei jedes dritte Gewicht auf die nächstliegende ganzzahlige Rundung einer Zahl gesetzt wird, die direkt proportional zu 2 hoch einem Exponentenwert, der gleich wie die Summe des ersten und zweiten Indexes des ersten und zweiten Basiszustands des mit dem dritten Gewicht assoziierten Basiszustandspaars ist, direkt proportional zu 2 hoch M, in direktem Verhältnis zu einer Zahl gleich wie das erste Skalieren des ersten Index multipliziert mit dem zweiten Skalierungsfaktor des zweiten Index, und in umgekehrtem Verhältnis zu dem Soll-Skalierungsparameter ist;
k) Berechnen (703) der Summe des Absolutwerts des aktuellen ersten, zweiten und dritten Gewichts;
l) Bestimmen (705), ob die Summe kleiner als oder gleich wie ein maximaler dritter Index ist;
m) wenn die Summe größer ist als der maximale dritte Index, Verringern von M um 1 und Wiederholen der Schritte h) bis l);
- Assoziieren erster Unbekannter mit jedem ersten Basiszustand des ersten Quantensystems;
- Assoziieren zweiter Unbekannter mit jedem zweiten Basiszustand des zweiten Quantensystems;
- Bereitstellen eines ersten Monoms für jede erste Unbekannte, jedes erste Monom umfassend eine erste Unbekannte multipliziert mit dem ersten Gewicht, das mit dem jeweiligen ersten Basiszustand assoziiert ist;
- Bereitstellen eines zweiten Monoms für jede zweite Unbekannte, jedes zweite Monom umfassend eine zweite Unbekannte multipliziert mit dem zweiten Gewicht, das mit dem jeweiligen zweiten Basiszustand assoziiert ist;
- Bereitstellen eines dritten Monoms für jedes Unbekanntenpaar, das ein Paar aus einer ersten und einer zweiten Unbekannten beinhaltet, jedes dritte Monom umfassend das Produkt aus:
- der ersten Unbekannten des Paars;
- der zweiten Unbekannten des Paars;
- dem dritten Gewicht, das mit dem Basiszustandspaar assoziiert ist, das den ersten Basiszustand, der mit der ersten Unbekannten des Unbekanntenpaars assoziiert ist, und den zweiten Basiszustand, der mit der zweiten Unbekannten des Unbekanntenpaars assoziiert ist, beinhaltet;
- Definieren (603) eines Polynoms als die Summe des ersten, des zweiten und des dritten Monoms;
- Bereitstellen (605) einer Quantenschaltung, die einen mit dem ersten Quantenregister und dem zweiten Quantenregister gekoppelten Eingang und einen mit dem Ausgangs-Quantenregister gekoppelten Ausgang aufweist, wobei die Quantenschaltung konfiguriert ist, um eine Quantentransformation zum Bewerten des Polynoms in ein Ausgaberegister anzuwenden, indem sie die ersten Unbekannten basierend auf der ersten Menge von Qubits des ersten Quantensystems setzt, und indem sie die zweiten Unbekannten basierend auf der zweiten Menge von Qubits des zweiten Quantensystems setzt,
- Anwenden (607) der Quantentransformation auf das erste und das zweite Quantenregister, um das Polynom in das Ausgangs-Quantenregister zu bewerten.

10. Verfahren nach Anspruch 9, ferner umfassend:
- Setzen des dritten Versatzes auf den ersten Versatz multipliziert mit dem zweiten Versatz;
- Setzen des dritten Skalierens auf den Wert des Soll-Skalierungsparameters.

11. Verfahren nach Anspruch 9 oder 10, wobei die ganze Zahl M von Folgendem abhängt:
- dem ersten Skalieren;
- dem zweiten Skalieren;
- dem Wert des Soll-Skalierungsparameters;
- der Menge von Qubits der ersten Menge von Qubits;
- der Menge von Qubits der zweiten Menge von Qubits;
- der Menge von Qubits der dritten Menge von Qubits;

12. Verfahren nach einem der Ansprüche 9 bis 11, wobei das Generieren der ersten Menge von ersten Gewichten, der zweiten Menge von zweiten Gewichten und der dritten Menge von dritten Gewichten ferner ein Verringern (807) der Anzahl von Qubits in der dritten Menge von Qubits auf eine Anzahl umfasst, die der Summe am nächsten ist, die eine Zweierpotenz ist.

13. Verfahren nach einem der Ansprüche 4 bis 12, wobei der Soll-Skalierungsparameter einen Wert aufweist, der einem von dem ersten Skalieren und dem zweiten Skalieren entspricht.

14. Computersystem (100), umfassend einen klassischen Computer (101) und einen Quantencomputer (102), wobei der klassische Computer (101) konfiguriert ist, um den Betrieb des Quantencomputers (102) unter Verwendung einer Schnittstelle (103) mit dem Quantencomputer zu steuern, der Quantencomputer (102) umfassend ein Quantenregister (105), das eine Menge von Qubits speichert, die ein Quantensystem definieren, das eine Rechenbasis aufweist, die eine Menge von Basiszuständen umfasst, wobei ein allgemeiner Zustand des Quantensystems eine Linearkombination der Menge von Basiszuständen ist, ein Koeffizient jedes Basiszustands in der Linearkombination der Quadratwurzel einer Wahrscheinlichkeit eines Messens des Basiszustands entspricht, wobei das Computersystem zu Folgendem konfiguriert ist:
- Bereitstellen einer geordneten Menge aufeinanderfolgender nichtnegativer ganzzahliger Indizes, wobei jeder Index mit einem jeweils anderen der Basiszustände des Quantenregisters (105) assoziiert ist;
- Bereitstellen einer Zufallsvariable, die Werte in einem endlichen Bereich klassischer Werte annimmt und eine Wahrscheinlichkeitsverteilung in dem entsprechenden Bereich aufweist;
- Zuordnen jedes einzelnen einer endlichen Menge von Domänenwerten innerhalb der Domäne zu einem jeweils anderen der Indizes der Menge durch eine bijektive affine Transformation, wobei die affine Transformation ein Ausdrücken jedes Domänenwerts der Menge abhängig von dem jeweiligen Index durch ein Skalieren des jeweiligen Index und einen Versatz, der auf den skalierten Index angewendet wird, bereitstellt, das Skalieren umfassend ein Multiplizieren des jeweiligen Index mit einem Skalierungsfaktor, der eine von Null verschiedene reelle Zahl ist, und der Versatz, der auf den skalierten Index angewendet wird, umfassend eine Addition einer reellen Zahl zu dem skalierten Index, wobei die reellen Zahlen klassische Beiträge sind;
- Darstellen der Zufallsvariablen in dem Computersystem über das Quantensystem, das Darstellen der Zufallsvariablen umfassend ein Generieren einer Quantenvariablen, die einen Zustand des Quantensystems identifiziert, das Generieren der Quantenvariablen umfassend ein Setzen jedes Koeffizienten von jedem Basiszustand auf die Quadratwurzel des Werts der Wahrscheinlichkeitsverteilung bei dem Domänenwert, der dem Index zugeordnet ist, der mit dem Basiszustand assoziiert ist.

15. Computerprogramm, das konfiguriert ist, um ein Computersystem (100) zu veranlassen, das Verfahren nach einem der Ansprüche 1 bis 13 durchzuführen, wenn das Computerprogramm auf dem Computersystem ausgeführt wird, wobei das Computersystem (100) einen klassischen Computer (101) und einen Quantencomputer (102) umfasst.

## Revendications

1. Procédé d'exploitation d'un système informatique (100) comprenant un ordinateur classique (101) et un ordinateur quantique (102), l'ordinateur classique (101) étant configuré pour commander le fonctionnement de l'ordinateur quantique (102) en utilisant une interface (103) avec l'ordinateur quantique (102), comprenant :
- la fourniture dans l'ordinateur quantique (102) du système informatique d'un registre quantique (105) stockant un ensemble de qubits définissant un système quantique ayant une base de calcul comprenant un ensemble d'états de base, un état générique du système quantique étant une combinaison linéaire dudit ensemble d'états de base, un coefficient de chaque état de base dans la combinaison linéaire correspondant à la racine carrée d'une probabilité de mesure de l'état de base ;
- la fourniture (201) d'un ensemble ordonné d'indices entiers non négatifs consécutifs, chaque indice étant associé à un état respectif différent parmi les états de base du registre quantique (105) ;
- la fourniture d'une variable aléatoire valorisée dans un domaine fini de valeurs classiques, et ayant une distribution de probabilité dans le domaine correspondant ;
- le mappage (203) de chacune d'un ensemble fini de valeurs de domaine au sein dudit domaine à l'un respectif différent des indices de l'ensemble au moyen d'une transformation affine bijective, ladite transformation affine permettant d'exprimer chaque valeur de domaine de l'ensemble en fonction de l'indice respectif ay moyen d'une mise à l'échelle dudit indice respectif et un décalage appliqué à l'indice mis à l'échelle, ladite mise à l'échelle comprenant la multiplication dudit indice respectif par un facteur de mise à l'échelle étant un nombre réel non nul et ledit décalage appliqué à l'indice mis à l'échelle comprenant une addition d'un nombre réel audit indice mis à l'échelle, dans lequel lesdits nombres réels sont des contributions classiques ;
- la représentation (205) de ladite variable aléatoire dans le système informatique au moyen dudit système quantique, ladite représentation de ladite variable aléatoire comprenant la génération d'une variable quantique identifiant un état du système quantique, ladite génération de la variable quantique comprenant le réglage de chaque coefficient de chaque état de base à la racine carrée de la valeur de la distribution de probabilité à la valeur de domaine mappée à l'indice associé audit état de base.

2. Procédé selon la revendication 1, dans lequel ledit mappage (203) comprend :
- la définition d'une plage de tolérance autour de chacune des valeurs de domaine de l'ensemble,
- l'approximation des valeurs de la variable aléatoire dans la plage de tolérance autour d'une valeur de domaine correspondante par la valeur de domaine correspondante, moyennant quoi les valeurs de la variable aléatoire dans la plage de tolérance autour d'une valeur de domaine de l'ensemble sont mappées à l'indice auquel ladite valeur de domaine de l'ensemble est mappée.

3. Procédé selon la revendication 1 ou 2, dans lequel :
- ledit registre quantique (105) comprend :
- un premier registre quantique stockant un premier ensemble de qubits définissant un premier système quantique ayant une première base de calcul comprenant un ensemble de premiers états de base, un état générique du premier système quantique étant une combinaison linéaire dudit ensemble de premiers états de base, un coefficient de chaque premier état de base dans la combinaison linéaire correspondant à la racine carrée d'une probabilité de mesure du premier état de base ;
- un deuxième registre quantique stockant un deuxième ensemble de qubits définissant un deuxième système quantique ayant une deuxième base de calcul comprenant un ensemble de deuxièmes états de base, un état générique du deuxième système quantique étant une combinaison linéaire dudit ensemble de deuxièmes états de base, un coefficient de chaque deuxième état de base dans la combinaison linéaire correspondant à la racine carrée d'une probabilité de mesure du deuxième état de base
- ladite fourniture (201) d'un ensemble ordonné d'indices entiers non négatifs consécutifs comprend :
- la fourniture d'un premier ensemble ordonné de premiers indices entiers non négatifs consécutifs, chaque premier indice étant associé à un état respectif différent parmi les premiers états de base ;
- la fourniture d'un deuxième ensemble ordonné de deuxièmes indices entiers non négatifs consécutifs, chaque deuxième indice étant associé à l'un respectif différent parmi les deuxièmes états de base ;
- ladite fourniture d'une variable aléatoire comprend la fourniture d'une première et d'une deuxième variables aléatoires indépendantes, ladite première variable aléatoire ayant une première distribution de probabilité dans un premier domaine correspondant, ladite deuxième variable aléatoire ayant une deuxième distribution de probabilité dans un deuxième domaine correspondant,
- ledit mappage (203) comprend :
- le mappage de chacune d'un ensemble fini de premières valeurs de domaine au sein dudit premier domaine à l'un respectif différent des premiers indices de l'ensemble au moyen d'une première transformation affine bijective, ladite première transformation affine permettant d'exprimer chaque première valeur de domaine de l'ensemble en fonction du premier indice respectif au moyen d'une première mise à l'échelle dudit premier indice respectif et d'un premier décalage appliqué au premier indice mis à l'échelle, et
- le mappage de chacune d'un ensemble fini de deuxièmes valeurs de domaine au sein dudit deuxième domaine à l'un respectif différent des deuxièmes indices de l'ensemble au moyen d'une deuxième transformation affine bijective, ladite deuxième transformation affine permettant d'exprimer chaque deuxième valeur de domaine de l'ensemble en fonction du deuxième indice respectif au moyen d'une deuxième mise à l'échelle dudit deuxième indice respectif et d'un deuxième décalage appliqué au deuxième indice mis à l'échelle ;
- ladite représentation (205) de ladite variable aléatoire dans le système informatique au moyen dudit système quantique comprend :
- la représentation de ladite première variable aléatoire dans le système informatique au moyen dudit premier système quantique, ladite représentation de ladite première variable aléatoire comprenant la génération d'une première variable quantique identifiant un premier état du premier système quantique, ladite génération de la première variable quantique comprenant le réglage de chaque coefficient de chaque premier état de base à la racine carrée de la valeur de la première distribution de probabilité à la première valeur de domaine mappée au premier indice associé audit premier état de base,
- la représentation de ladite deuxième variable aléatoire dans le système informatique au moyen dudit deuxième système quantique, ladite représentation de ladite deuxième variable aléatoire comprenant la génération d'une deuxième variable quantique identifiant un deuxième état du deuxième système quantique, ladite génération de la deuxième variable quantique comprenant le réglage de chaque coefficient de chaque deuxième état de base à la racine carrée de la valeur de la deuxième distribution de probabilité à la deuxième valeur de domaine mappée au deuxième indice associé audit deuxième état de base ;

4. Procédé selon la revendication 1 ou 2, dans lequel :
- ladite variable aléatoire comprend une première et une deuxième variables aléatoires dépendantes ;
- ladite distribution de probabilité comprend une distribution de probabilité conjointe dans un premier domaine pour la première variable aléatoire et dans un deuxième domaine pour la deuxième variable aléatoire ;
- ledit registre quantique (105) comprend :
- un premier registre quantique stockant un premier ensemble de qubits définissant un premier système quantique ayant une première base de calcul comprenant un ensemble de premiers états de base, un état générique du premier système quantique étant une combinaison linéaire dudit ensemble de premiers états de base, un coefficient de chaque premier état de base dans la combinaison linéaire correspondant à la racine carrée d'une probabilité de mesure du premier état de base ;
- un deuxième registre quantique stockant un deuxième ensemble de qubits définissant un deuxième système quantique ayant une deuxième base de calcul comprenant un ensemble de deuxièmes états de base, un état générique du deuxième système quantique étant une combinaison linéaire dudit ensemble de deuxièmes états de base, un coefficient de chaque deuxième état de base dans la combinaison linéaire correspondant à la racine carrée d'une probabilité de mesure du deuxième état de base
- ladite fourniture (201) d'un ensemble ordonné d'indices entiers non négatifs consécutifs comprend :
- la fourniture d'un premier ensemble ordonné de premiers indices entiers non négatifs consécutifs, chaque premier indice étant associé à un état respectif différent parmi les premiers états de base ;
- la fourniture d'un deuxième ensemble ordonné de deuxièmes indices entiers non négatifs consécutifs, chaque deuxième indice étant associé à un état respectif différent parmi les deuxièmes états de base ;
- ledit mappage (203) comprend :
- le mappage de chacune d'un ensemble fini de premières valeurs de domaine au sein dudit premier domaine à l'un respectif différent des premiers indices de l'ensemble ay moyen d'une première transformation affine bijective, ladite première transformation affine permettant d'exprimer chaque première valeur de domaine de l'ensemble en fonction du premier indice respectif au moyen d'une première mise à l'échelle dudit premier indice respectif et d'un premier décalage appliqué au premier indice mis à l'échelle, et
- le mappage de chacune d'un ensemble fini de deuxièmes valeurs de domaine au sein dudit deuxième domaine à l'un respectif différent des deuxièmes indices de l'ensemble au moyen d'une deuxième transformation affine bijective, ladite deuxième transformation affine permettant d'exprimer chaque deuxième valeur de domaine de l'ensemble en fonction du deuxième indice respectif au moyen d'une deuxième mise à l'échelle dudit deuxième indice respectif et d'un deuxième décalage appliqué au deuxième indice mis à l'échelle ;
- ladite représentation (205) de ladite variable aléatoire comprend la représentation desdites première et deuxième variables aléatoires dépendantes dans le système informatique au moyen d'un système quantique conjoint étant l'interconnexion dudit premier système quantique avec ledit deuxième système quantique, et la génération d'une variable quantique conjointe identifiant un état du système quantique conjoint, une probabilité de mesurer un état du système quantique conjoint étant réglée sur une valeur de ladite distribution de probabilité conjointe correspondant à une paire de domaines comprenant une première valeur de domaine et une deuxième valeur de domaine.

5. Procédé selon la revendication 3 ou 4, comprenant en outre la détermination d'une somme des première et deuxième variables aléatoires, la détermination de la somme comprenant :
- la fourniture d'un registre quantique de sortie (105) stockant un troisième ensemble de qubits, définissant ainsi un troisième système quantique ayant une base de calcul comprenant un ensemble d'états de base, ladite somme des première et deuxième variables aléatoires étant déterminée comme une troisième variable aléatoire représentée dans le système informatique au moyen dudit troisième système quantique, l'état du troisième système quantique dans la base de calcul représentant une valeur de la troisième variable aléatoire basée sur un mappage, au moyen d'une troisième relation affine, de troisièmes valeurs de domaine au sein d'un troisième domaine de la troisième variable aléatoire à des troisièmes indices d'un troisième ensemble ordonné de troisièmes indices entiers non négatifs consécutifs, chaque troisième indice étant associé à l'un respectif différent parmi les troisièmes états de base, ladite troisième relation affine permettant d'exprimer chaque troisième valeur de domaine en fonction d'un troisième indice respectif au moyen d'une troisième mise à l'échelle dudit troisième indice respectif et d'un troisième décalage appliqué au troisième indice mis à l'échelle,
- la réception d'un paramètre de mise à l'échelle cible identifiant une valeur cible pour une telle troisième mise à l'échelle ;
- la génération d'un premier ensemble de premiers poids associés aux premiers états de base et d'un deuxième ensemble de deuxièmes poids associés aux deuxièmes états de base en effectuant la séquence d'opérations suivante :
a) fourniture d'un nombre entier M ;
b) réglage (401) de valeurs actuelles pour les premiers poids, chaque premier poids étant réglé sur l'arrondi entier le plus proche d'un nombre en proportion directe à 2 au premier indice de la première base associée au premier poids, en proportion directe à 2 à M, en proportion directe à la première mise à l'échelle du premier indice, et en proportion inverse audit paramètre de mise à l'échelle cible ;
c) définition (401) de valeurs actuelles pour les deuxièmes poids, chaque deuxième poids étant réglé sur l'arrondi entier le plus proche d'un nombre en proportion directe à 2 au deuxième indice de la deuxième base associée au deuxième poids, en proportion directe à 2 à M, en proportion directe à la deuxième mise à l'échelle du deuxième indice, et en proportion inverse audit paramètre de mise à l'échelle cible ;
d) calcul (403) de la somme de la valeur absolue des premier et deuxième poids actuels ;
e) détermination (405) pour savoir si la somme est inférieure ou égale à un troisième indice maximum ;
f) dans le cas où la somme est supérieure au troisième indice maximum, diminution de M par 1 et répétition de b) à e) ;
- l'association de premières inconnues à chaque premier état de base du premier système quantique ;
- l'association de deuxièmes inconnues à chaque deuxième état de base du deuxième système quantique ;
- la fourniture d'un monôme pour chaque inconnue, le monôme comprenant l'inconnue multipliée par le poids associé à l'état de base respectif ;
- la définition (303) d'un polynôme comme la somme des monômes ;
- la fourniture (305) d'un circuit quantique ayant une entrée couplée au premier registre quantique et au deuxième registre quantique, et une sortie couplée au registre quantique de sortie, le circuit quantique étant configuré pour appliquer une transformation quantique permettant d'évaluer le polynôme dans le registre de sortie en réglant les premières inconnues sur la base du premier ensemble de qubits du premier système quantique et en réglant les secondes inconnues sur la base du deuxième ensemble de qubits du deuxième système quantique,
- l'application (307) de la transformation quantique sur le premier registre quantique et le deuxième registre quantique pour évaluer le polynôme dans le registre quantique de sortie.

6. Procédé selon la revendication 5, comprenant en outre :
- le réglage dudit troisième décalage sur le premier décalage plus le deuxième décalage ;
- le réglage de ladite troisième mise à l'échelle sur la valeur du paramètre de mise à l'échelle cible multipliée par 2 à moins M.

7. Procédé selon la revendication 5 ou 6, dans lequel ledit entier M dépend de :
- la première mise à l'échelle ;
- la deuxième mise à l'échelle ;
- la valeur du paramètre de mise à l'échelle cible ;
- le nombre de qubits du premier ensemble de qubits ;
- le nombre de qubits du deuxième ensemble de qubits ;
- le nombre de qubits du troisième ensemble de qubits.

8. Procédé selon l'une quelconque des revendications 5 à 7, dans lequel ladite génération du premier ensemble de premiers poids et du deuxième ensemble de deuxièmes poids comprend en outre l'abaissement (507) du nombre de qubits dans le troisième ensemble de qubits à un nombre le plus proche de la somme qui est une puissance de deux.

9. Procédé selon la revendication 3 ou 4, comprenant en outre la détermination d'une multiplication des première et deuxième variables aléatoires, la détermination de la multiplication comprenant :
- la fourniture d'un registre quantique de sortie (105) stockant un troisième ensemble de qubits, définissant ainsi un troisième système quantique ayant une base de calcul comprenant un ensemble d'états de base, ladite multiplication des première et deuxième variables aléatoires étant déterminée comme une troisième variable aléatoire représentée dans le système informatique au moyen dudit troisième système quantique, l'état du troisième système quantique dans la base de calcul représentant une valeur de la troisième variable aléatoire basée sur un mappage, au moyen d'une troisième relation affine, de troisièmes valeurs de domaine au sein d'un troisième domaine de la troisième variable aléatoire à des troisièmes indices d'un troisième ensemble ordonné de troisièmes indices entiers non négatifs consécutifs, chaque troisième indice étant associé à l'un respectif différent parmi les troisièmes états de base, ladite troisième relation affine permettant d'exprimer chaque troisième valeur de domaine en fonction d'un troisième indice respectif au moyen d'une troisième mise à l'échelle dudit troisième indice respectif et d'un troisième décalage appliqué au troisième indice mis à l'échelle,
- la réception d'un paramètre de mise à l'échelle cible identifiant une valeur cible pour une telle troisième mise à l'échelle ;
- la génération d'un premier ensemble de premiers poids associés aux premiers états de base, d'un deuxième ensemble de deuxièmes poids associés aux deuxièmes états de base et d'un troisième ensemble de troisièmes poids associés à des paires d'états de base comprenant chacune un premier état de base et un second état de base en effectuant la séquence d'opérations suivante :
g) fourniture d'un nombre entier M ;
h) réglage (701) de valeurs actuelles pour les premiers poids, chaque premier poids étant réglé sur l'arrondi entier le plus proche d'un nombre en proportion directe à 2 au premier indice de la première base associée au premier poids, en proportion directe à 2 à M, en proportion directe à un nombre égal à la première mise à l'échelle du premier indice multiplié par le deuxième décalage, et en proportion inverse audit paramètre de mise à l'échelle cible ;
i) réglage (701) de valeurs actuelles pour les deuxièmes poids, chaque deuxième poids étant réglé sur l'arrondi entier le plus proche d'un nombre en proportion directe à 2 au deuxième indice de la deuxième base associée au deuxième poids, en proportion directe à 2 à M, en proportion directe à un nombre égal à la deuxième mise à l'échelle du deuxième indice multiplié par le premier décalage, et en proportion inverse audit paramètre de mise à l'échelle cible ;
j) réglage (701) de valeurs actuelles pour les troisièmes poids, chaque troisième poids étant réglé sur l'arrondi entier le plus proche d'un nombre en proportion directe à 2 à une valeur d'exposant égale à la somme des premier et deuxième indices des premier et deuxième états de base de la paire d'états de base associée au troisième poids, en proportion directe à 2 à M, en proportion directe à un nombre égal à la première mise à l'échelle du premier indice multiplié par la deuxième mise à l'échelle du deuxième indice, et en proportion inverse audit paramètre de mise à l'échelle cible ;
k) calcul (703) de la somme de la valeur absolue des premier, deuxième et troisième poids actuels ;
1) détermination (705) pour savoir si la somme est inférieure ou égale à un troisième indice maximum ;
m) dans le cas où la somme est supérieure au troisième indice maximum, diminution de M par 1 et répétition de h) à l) ;
- l'association de premières inconnues à chaque premier état de base du premier système quantique ;
- l'association de deuxièmes inconnues à chaque deuxième état de base du deuxième système quantique ;
- la fourniture d'un premier monôme pour chaque première inconnue, chaque premier monôme comprenant une première inconnue multipliée par le premier poids associé au premier état de base respectif ;
- la fourniture d'un deuxième monôme pour chaque deuxième inconnue, chaque deuxième monôme comprenant une deuxième inconnue multipliée par le deuxième poids associé au deuxième état de base respectif ;
- la fourniture d'un troisième monôme pour chaque paire inconnue comprenant une paire de première et seconde inconnues, chaque troisième monôme comprenant le produit entre :
- la première inconnue de la paire ;
- la seconde inconnue de la paire ;
- le troisième poids associé à la paire d'états de base comprenant le premier état de base associé à la première inconnue de la paire inconnue et le deuxième état de base associé à la deuxième inconnue de la paire inconnue ;
- la définition (603) d'un polynôme comme la somme des premier, deuxième et troisième monômes ;
- la fourniture (605) d'un circuit quantique ayant une entrée couplée au premier registre quantique et au deuxième registre quantique, et une sortie couplée au registre quantique de sortie, le circuit quantique étant configuré pour appliquer une transformation quantique pour évaluer le polynôme dans le registre de sortie en réglant les premières inconnues sur la base du premier ensemble de qubits du premier système quantique et en réglant les secondes inconnues sur la base du deuxième ensemble de qubits du deuxième système quantique,
- l'application (607) de la transformation quantique sur le premier registre quantique et le deuxième registre quantique pour évaluer le polynôme dans le registre quantique de sortie.

10. Procédé de la revendication 9, comprenant en outre :
- le réglage dudit troisième décalage sur le premier décalage multiplié par le deuxième décalage ;
- le réglage de ladite troisième mise à l'échelle à la valeur du paramètre de mise à l'échelle cible.

11. Procédé selon la revendication 9 ou 10, dans lequel ledit entier M dépend de :
- la première mise à l'échelle ;
- la deuxième mise à l'échelle ;
- la valeur du paramètre de mise à l'échelle cible ;
- le nombre de qubits du premier ensemble de qubits ;
- le nombre de qubits du deuxième ensemble de qubits ;
- le nombre de qubits du troisième ensemble de qubits.

12. Procédé selon l'une quelconque des revendications 9 à 11, dans lequel ladite génération du premier ensemble de premiers poids, du deuxième ensemble de deuxièmes poids et du troisième ensemble de troisièmes poids comprend en outre l'abaissement (807) du nombre de qubits dans le troisième ensemble de qubits à un nombre le plus proche de la somme qui est une puissance de deux.

13. Procédé selon l'une quelconque des revendications 4 à 12, dans lequel ledit paramètre de mise à l'échelle cible a une valeur correspondant à l'une de ladite première mise à l'échelle et de ladite deuxième mise à l'échelle.

14. Système informatique (100), comprenant un ordinateur classique (101) et un ordinateur quantique (102), l'ordinateur classique (101) étant configuré pour commander le fonctionnement de l'ordinateur quantique (102) en utilisant une interface (103) avec l'ordinateur quantique, l'ordinateur quantique (102) comprenant un registre quantique (105) stockant un ensemble de qubits définissant un système quantique ayant une base de calcul comprenant un ensemble d'états de base, un état générique du système quantique étant une combinaison linéaire dudit ensemble d'états de base, un coefficient de chaque état de base dans la combinaison linéaire correspondant à la racine carrée d'une probabilité de mesure de l'état de base, le système informatique étant configuré pour :
- fournir un ensemble ordonné d'indices entiers non négatifs consécutifs, chaque indice étant associé à l'un respectif différent parmi les états de base du registre quantique (105) ;
- fournir une variable aléatoire valorisée dans un domaine fini de valeurs classiques, et ayant une distribution de probabilité dans le domaine correspondant ;
- mapper chacune d'un ensemble fini de valeurs de domaine au sein dudit domaine à l'un respectif différent des indices de l'ensemble par une transformation affine bijective, ladite transformation affine permettant d'exprimer chaque valeur de domaine de l'ensemble en fonction de l'indice respectif au moyen d'une mise à l'échelle dudit indice respectif et d'un décalage appliqué à l'indice mis à l'échelle, ladite mise à l'échelle comprenant la multiplication dudit indice respectif par un facteur de mise à l'échelle étant un nombre réel non nul et ledit décalage appliqué à l'indice mis à l'échelle comprenant une addition d'un nombre réel audit indice mis à l'échelle, dans lequel lesdits nombres réels sont des contributions classiques ;
- représenter ladite variable aléatoire dans le système informatique par le biais dudit système quantique, ladite représentation de ladite variable aléatoire comprenant la génération d'une variable quantique identifiant un état du système quantique, ladite génération de la variable quantique comprenant le réglage de chaque coefficient de chaque état de base à la racine carrée de la valeur de la distribution de probabilité à la valeur de domaine mappée à l'indice associé audit état de base.

15. Programme informatique configuré pour amener un système informatique (100) à réaliser le procédé selon l'une quelconque des revendications 1 à 13 lorsque le programme informatique est exécuté sur le système informatique, dans lequel ledit système informatique (100) comprend un ordinateur classique (101) et un ordinateur quantique (102).
